# EUROPÄISCHE PATENTSCHRIFT

(11) **EP 4 158 711 B1**
(45) Veröffentlichungstag und Bekanntmachung des Hinweises auf die Patenterteilung: **24.09.2025**
(21) Anmeldenummer: 21721918.7
(22) Anmeldetag: 28.04.2021
(51) Int. Cl.: H01M 10/04, H01M 10/42, H01M 10/48, H01M 50/528, H01M 50/531, H01M 50/536, H01M 50/107, H01M 10/0587

(54) **ELEKTROCHEMISCHE ZELLE**
ELECTROCHEMICAL CELL
ÉLÉMENT ÉLECTROCHIMIQUE

(30) Priorität: 29.05.2020 EP 20177373
(43) Veröffentlichungstag der Anmeldung: 05.04.2023
(73) Patentinhaber: VARTA Microbattery GmbH, 73479 Ellwangen Jagst (DE)
(72) Erfinder: STOCK, Stefan, 73492 Rainau (DE); PYTLIK, Edward, 73479 Ellwangen (DE); ENSLING, David, 73479 Ellwangen (DE); ELMER, Martin, 73479 Ellwangen (DE)
(74) Vertreter: Ostertag & Partner Patentanwälte mbB
(86) Internationale Anmeldenummer: PCT/EP2021/061161
(87) Internationale Veröffentlichungsnummer: WO 2021/239372

(56) Entgegenhaltungen:
- EP-A1- 3 376 582
- EP-A1- 3 637 534
- EP-B1- 1 076 371
- DE-A1- 102014 206 832
- FR-A1- 2 986 867
- KR-B1- 101 948 626

## Beschreibung

Die vorliegende Erfindung betrifft eine elektrochemische Zelle, insbesondere eine sekundäre elektrochemische Zelle.

In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden Ionenstrom innerhalb der elektrochemischen Zellen. Dieser lonenstrom durchquert den Separator und wird durch einen ionenleitenden Elektrolyten gewährleistet.

In sekundären (wieder aufladbaren) elektrochemischen Zellen ist diese Entladereaktion reversibel, es besteht also die Möglichkeit, die bei der Entladung erfolgte Umwandlung chemischer Energie in elektrische Energie umzukehren.

Werden im Zusammenhang mit sekundären elektrochemischen Zellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Ein bekanntes Beispiel für ein sekundäre elektrochemische Zelle ist die Lithium-Ionen-Zelle. Diese umfasst Elektroden, die Lithiumionen reversibel aufnehmen und wieder abgeben können, sowie einen Lithiumionen enthaltenden Elektrolyten.

Lithium-Ionen-Zellen enthalten ihre Elektroden und Separatoren in aller Regel in Form eines Verbundkörpers. Bei einem solchen Verbundkörper kann es sich um einen Zellenstapel (stack), aus mehreren Zellen handeln. Meist ist der Verbundkörper aber eine Einzelzelle in gewickelter Form (Wickelverbundkörper oder kurz Wickelzelle).

In den Verbundkörpern liegen in der Regel positive und negative Elektroden sowie Separatoren flach aufeinander. Meist sind die Elektroden und Separatoren beispielsweise durch Lamination oder durch Verklebung miteinander verbunden. In der Regel umfassen Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich oder auch für andere Anwendungen mit hohem Energiebedarf werden zur Erzeugung hoher Spannungen häufig mehrere gewickelte elektrochemische Zellen zu einem Batteriemodul miteinander verschaltet. Abweichungen von einem Normalbetrieb bereits einer der Zellen können zu einer Schädigung des gesamten Moduls führen. Es ist daher wünschenswert, den Betrieb der Zellen zu überwachen, da mittels einer Überwachung problematische Zustände der Zellen rechtzeitig erkannt und entsprechende Maßnahmen eingeleitet werden können.

Es sind bereits verschiedene Ansätze bekannt, um eine Sensorik in elektrochemischen Zellen zu integrieren. So beschreibt beispielsweise die internationale Patentanmeldung WO 2013/120668 A1 eine Sensorvorrichtung für eine Zelle eines elektrischen Energiespeichers, wobei neben einer Referenzelektrode innerhalb des Gehäuses der Zelle weiterhin eine Einrichtung zum Erfassen von Sensordaten vorgesehen ist, wobei die Einrichtung an die Anode und die Kathode angeschlossen ist. Hiermit können beispielsweise Daten zur Temperatur und/oder dem Druck in der Zelle erfasst werden.

Die deutsche Offenlegungsschrift DE 102012223480 A1 beschreibt eine Zelle, die eine Vorrichtung zur Überwachung mindestens eines Parameters der Zelle aufweist, wobei diese Vorrichtung mindestens einen Sensor, beispielsweise einen chemischen Sensor oder einen Spannungssensor, umfasst. Die für den Betrieb der Überwachungsvorrichtung erforderliche Betriebsspannung wird von der Zelle abgegriffen.

Die EP 3376582 A1 betrifft eine gewickelte Lithium-Ionen-Zelle mit einem zentralen Hohlraum. Die Zelle ist mit einem Monitoring-System ausgestattet, wobei ein Temperatursensor und ein Spannungssensor im Hohlraum der Zelle vorgesehen sind.

Auch die KR 101948626 B1 betrifft eine Lithium-Ionen-Zelle mit einem zentralen Hohlraum, in dem eine Sensorik angeordnet sein kann.

Aus der EP 3637534 A1 ist eine zylindrische Batterie bekannt, die einen Elektrodenwickel in einem Gehäuse umfasst. Zwischen dem Gehäuseboden und dem Elektrodenwickel ist ein Drucksensor angeordnet, der einen internen Druck in dem Gehäuse messen kann. Der Drucksensor weist elektrisch isolierende Eigenschaften auf.

Aus der EP 1076371 B1 ist eine Lithium-Ionen-Zelle bekannt, bei der die Elektroden in gewickelter Form vorliegen und eine elektrische Kontaktierung der Elektroden über Kontaktplatten erfolgt, die auf den Längsrändern der gewickelten Elektroden aufliegen.

Der vorliegenden Erfindung liegt die Aufgabe zugrunde, eine technische Lösung bereitzustellen, die es erlaubt, den Betrieb einzelner elektrochemischer Zellen in einem Batteriemodul zu überwachen. Die Lösung soll sich hierbei möglichst einfach in den Prozess der Fertigung der elektrochemischen Zellen integrieren lassen.

Diese Aufgabe wird durch die nachfolgend beschriebene elektrochemische Zelle gelöst. Bevorzugte Ausgestaltungen dieser Zelle ergeben sich aus den abhängigen Ansprüchen.

Die erfindungsgemäße elektrochemische Zelle zeichnet sich stets durch die folgenden Merkmale aus:
a. die Zelle umfasst mindestens eine bandförmige negative Elektrode,
b. die Zelle umfasst mindestens eine bandförmige positive Elektrode,
c. die mindestens eine negative Elektrode und die mindestens eine positive Elektrode umfassen jeweils einen Stromkollektor und eine auf den Stromkollektor aufgebrachte elektrochemisch aktive Komponente,
d. die mindestens eine negative Elektrode und die mindestens eine positive Elektrode bilden einen Verbund und sind dabei durch mindestens einen Separator voneinander getrennt,
e. der Verbund aus der mindestens einen negativen Elektrode, dem mindestens einen Separator und der mindestens einen positiven Elektrode ist spiralförmig um eine Wickelachse gewickelt und bildet einen Wickel, wobei der Wickel zwei endständige Stirnseiten und einen umlaufenden Wickelmantel aufweist,
f. die negative Elektrode und die positive Elektrode sind derart ausgebildet und/oder innerhalb des Verbundes derart zueinander angeordnet, dass ein Längsrand des Stromkollektors der negativen Elektrode aus einer der endständigen Stirnseiten und ein Längsrand des Stromkollektors der positiven Elektrode aus der anderen der endständigen Stirnseiten des Wickels austritt,
g. die Zelle umfasst mindestens ein metallisches Kontaktblechbauteil, das in unmittelbarem Kontakt mit einem der austretenden Längsränder steht und das mit diesem Längsrand durch Verschweißung verbunden ist,
h. der Wickel umfasst einen zentralen Hohlraum, durch den die Wickelachse verläuft,
i. die Zelle weist ein Gehäuse mit einer ersten und einer zweiten Stirnseite und einem ringförmigen Gehäusemantel auf, das einen Innenraum, in dem der Wickel angeordnet ist, dichtend umschließt.
j. In dem zentralen Hohlraum ist mindestens ein Sensormittel oder mindestens ein Teil eines Sensormittels angeordnet, das Zustandsänderungen des Wickels qualitativ und/oder quantitativ erfassen kann, und
k. an der ersten und/oder der zweiten Stirnseite befindet sich ein Anzeige- und/oder Kontaktmittel, das von dem mindestens einen Sensormittel erfasste Messwerte anzeigen und/oder über das diese Messwerte an eine Empfangs- und/oder Auswerteeinheit übertragen werden können.

Weiterhin zeichnet sich die erfindungsgemäße elektrochemische Zelle durch die folgenden Merkmale aus:
l. Das mindestens eine Sensormittel umfasst einen Drucksensor (25).
m. In dem zentralen Hohlraum des Wickels ist ein länglicher Hohlkörper angeordnet.
n. Das Sensormittel umfasst den in den zentralen Hohlraum hineinragenden länglichen Hohlkörper, über den der von dem Gehäuse umschlossene Innenraum mit dem Drucksensor in kommunizierender Verbindung steht.

Die erfindungsgemäße Zelle zeichnet sich also insbesondere dadurch aus, dass der zentrale Hohlraum des Wickels funktional genutzt wird, indem das mindestens eine Sensormittel oder der mindestens eine Teil des Sensormittels darin angeordnet werden. Mit Hilfe des oder der Sensormittel können Zustandsänderungen verschiedener Art des Wickels erfasst werden, wodurch je nach Ausführung der Sensormittel eine Zustandsüberwachung und/oder eine Diagnose der Zelle ermöglicht wird. Durch die Anordnung des oder der Sensormittel oder Teile des oder der Sensormittel in dem zentralen Hohlraum des Wickels wird eine besonders einfach zu realisierende und praktikable Lösung für die Ausstattung einer elektrochemischen Zelle mit Sensormitteln bereitgestellt.

Unter den erwähnten Zustandsänderungen werden vorliegend Eigenschaften der Zelle verstanden, die eine Bedeutung für die Funktion der Zelle haben. Hierbei spielen vor allem Druckänderungen, Temperaturänderungen und/oder Spannungsänderungen eine Rolle.

Prinzipiell eignet sich die hier beschriebene Anordnung der Sensormitteln bzw. Teile der Sensormittel sowohl für aufladbare (sekundäre) als auch für nicht aufladbare (primäre) Zellen. Da jedoch das Bedürfnis für eine Überwachungsfunktion bei primären Zellen in der Regel geringer ist und da der mit einer Sensorik verbundene Aufwand bei primären Zellen gegebenenfalls nicht in einem ausgeglichen Verhältnis zu seinem Nutzen steht, ist die Anordnung der Sensorik gemäß dem beschriebenen Konzept vor allem für sekundäre Zellen vorteilhaft. Bei der erfindungsgemäßen Zelle handelt es sich also bevorzugt um eine sekundäre elektrochemische Zelle.

Bevorzugt sind die bandförmige Anode und die bandförmige Kathode innerhalb des Elektroden-Separator-Verbunds versetzt zueinander angeordnet, um zu gewährleisten, dass der erste Längsrand des Anodenstromkollektors aus einer der endständigen Stirnseiten und der erste Längsrand des Kathodenstromkollektors aus der anderen der endständigen Stirnseiten austritt.

Durch die versetzte Anordnung und die Kontaktierung des oder der austretenden Längsränder der jeweiligen Stromkollektoren mit dem mindestens einen Kontaktblechbauteil können die besonderen Vorteile der im Inneren des Wickels angeordneten Sensorik in besonders vorteilhafter und synergetischer Weise genutzt werden.

Bevorzugt liegt das mindestens eine metallische Kontaktblechbauteil, das in unmittelbarem Kontakt mit einem der austretenden Längsränder steht und mit diesem durch Verschweißung verbunden ist, unmittelbar auf diesem Längsrand auf.

Das Kontaktblechbauteil ist in bevorzugten Ausführungsformen plattenförmig, also als Kontaktplatte, ausgebildet. Die Zelle umfasst also bevorzugt mindestens eine Kontaktplatte, die auf dem oder den für die Kontaktierung ausgebildeten Längsrändern aufliegt.

Der oder die aus den Stirnseiten austretenden Längsränder sind bevorzugt für eine Kontaktierung mit einem Teil des Gehäuses der Zelle ausgebildet. Hierzu können die Längsränder beispielsweise frei von der jeweiligen elektrochemisch aktiven Komponente gehalten sein, oder aber von der jeweiligen elektrochemisch aktiven Komponente befreit worden sein.

Bevorzugt weisen der Anodenstromkollektor und/oder der Kathodenstromkollektor daher mindestens einen freie Randstreifen auf, der sich entlang eines ihrer Längsränder erstreckt und der nicht mit dem Elektrodenmaterial beladen ist.

Zur Kontaktierung sind die jeweiligen Längsränder der Elektroden bevorzugt frei von Elektrodenmaterial. Der Längsrand bzw. die Längsränder sind vorzugsweise direkt mit dem jeweiligen Kontaktblechbauteil, insbesondere der Kontaktplatte, elektrisch leitend verbunden. Das Kontaktblechbauteil, insbesondere die Kontaktplatte, kann ein Gehäuseteil der Zelle sein. In alternativen Ausführungsformen ist es mit einem Gehäuseteil elektrisch verbunden. Kontaktierungen dieser Art sowie ausführlich in der WO 2017/215900 A1 beschrieben. Auf die WO 2017/215900 A1 wird hiermit vollumfänglich Bezug genommen.

Bei der Herstellung von Verbünden aus Elektroden und Separatoren wird üblicherweise darauf geachtet, dass es nicht zu einem stirnseitigen Überstehen entgegengesetzt gepolter Stromkollektoren kommt, da dies die Kurzschlussgefahr erhöhen kann. Bei der beschriebenen versetzten Anordnung ist die Kurzschlussgefahr jedoch minimiert, da die entgegengesetzt gepolten Stromkollektoren aus sich gegenüberliegenden Stirnseiten des Wickels austreten.

Den aus der versetzten Anordnung resultierenden Überstand der Stromkollektoren kann man sich zunutze machen, indem man die Längsränder mittels entsprechender Stromableiter möglichst über ihre gesamte Länge kontaktiert. Als Stromableiter kommen hierbei insbesondere Kontaktplatten in Frage, wie sie in der erwähnten WO 2017/215900 A1 beschrieben werden. Die hier beschriebenen Kontaktplatten können auch den Innenwiderstand innerhalb der erfindungsgemäßen Zelle sehr deutlich senken. Die beschriebene Anordnung kann das Auftreten großer Ströme somit sehr gut abfangen.

Mit minimiertem Innenwiderstand reduzieren sich thermische Verluste bei hohen Strömen. Zudem

Insgesamt zeichnet sich die erfindungsgemäße Zelle als Resultat der Kontaktierung der Längsränder der Stromkollektoren über Kontaktblechbauteile durch ein besonders gutes Temperaturverhalten aus. In Kombination mit der erfindungsgemäß im Inneren des Wickels vorgesehenen Sensorik ergibt sich damit bei den erfindungsgemäßen Zellen die Möglichkeit für ein optimales Zustandsmanagement der Zellen.

Bevorzugt handelt es sich bei dem Kontaktblechbauteil, insbesondere der Kontaktplatte, um eine Metallplatte mit einer Dicke im Bereich von 200 µm bis 1000 µm. Bevorzugt besteht das Kontaktblechbauteil, insbesondere die Kontaktplatte, aus Aluminium, Titan, Nickel, Edelstahl oder vernickeltem Stahl.

Es gibt mehrere Möglichkeiten, wie das Kontaktblechbauteil, insbesondere die Kontaktplatte, mit dem Längsrand verbunden werden kann. Wichtig ist, dass die Verbindung zwischen dem metallischen Kontaktblechbauteil und den Randstreifen der Anodenstromkollektoren oder der Kathodenstromkollektoren eine unmittelbare Verbindung ist. Die unmittelbare Anbindung des Kontaktblechbauteils an die Stromkollektoren der Elektroden kann hervorragende Entwärmungseigenschaften gewährleisten. Das oder die Kontaktblechbauteile können direkt mit dem Gehäuse elektrisch leitend verbunden sein oder das oder die Kontaktblechbauteile können Teil des Gehäuses sein. Das Kontaktblechbauteil, insbesondere die Kontaktplatte, kann mit dem Längsrand entlang einer linienartigen Kontaktzone in Kontakt stehen. Der Längsrand kann erfindungsgemäß einen oder mehrere Abschnitte, die jeweils über ihre gesamte Länge über eine Schweißnaht durchgehend mit dem Kontaktblechbauteil, insbesondere der Kontaktplatte, verbunden sind, umfassen.

In einer möglichen Weiterbildung können sich der bzw. die mit dem Kontaktblechbauteil, insbesondere der Kontaktplatte, über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes erstrecken.

In einigen Ausführungsformen können der oder die Längsränder über ihre gesamte Länge durchgehend mit dem Kontaktblechbauteil, insbesondere der Kontaktplatte, verschweißt sein.

Das mindestens eine Kontaktblechbauteil, insbesondere die Kontaktplatte, kann mindestens einen Schlitz und/oder mindestens eine Perforierung aufweisen. Diese dienen dazu, einer Verformung des Blechs, insbesondere der Platte, bei der Herstellung der Schweißverbindung entgegenzuwirken.

In bevorzugten Ausführungsformen hat das Kontaktblechbauteil, insbesondere die Kontaktplatte, die Form einer Scheibe, insbesondere die Form einer kreisförmigen oder zumindest näherungsweise kreisförmigen Scheibe. Sie weist dann also einen äußeren kreisförmigen oder zumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

Besonders bevorzugt weist die erfindungsgemäße Zelle ein erstes Kontaktblechbauteil, insbesondere eine erste Kontaktplatte, auf, die auf dem Längsrand des Stromkollektors der negativen Elektrode aufliegt, so dass sich eine linienartige erste Kontaktzone mit spiralförmiger Geometrie ergibt, und ein zweites Kontaktblechbauteil, insbesondere eine zweite Kontaktplatte, die auf dem Längsrand des Stromkollektors der positiven Elektrode aufliegt, so dass sich eine linienartige zweite Kontaktzone mit spiralförmiger Geometrie ergibt.

In besonders bevorzugten Ausführungsformen bestehen das erste Kontaktblechbauteil, insbesondere die erste Kontaktplatte, und der Stromkollektor der negativen Elektrode beide aus dem gleichen Material. Dieses wird besonders bevorzugt aus der Gruppe mit Kupfer, Nickel, Titan, vernickeltem Stahl und Edelstahl gewählt.

Das zweite Kontaktblechbauteil, insbesondere die zweite Kontaktplatte, und der Stromkollektor der positiven Elektrode bestehen besonders bevorzugt beide aus dem gleichen Material aus der Gruppe mit Aluminium, Nickel, Titan, vernickelter Stahl und Edelstahl.

Bei dem oder den Sensormitteln der erfindungsgemäßen Zelle kann es sich um verschiedene Arten von Sensoren bzw. Sensormitteln handeln. In besonders bevorzugten Ausgestaltungen ist mindestens eines der unmittelbar folgenden zusätzlichen Merkmale a. bis c. vorgesehen:
a. Das mindestens eine Sensormittel umfasst eine Referenzelektrode.
b. Das mindestens eine Sensormittel umfasst einen Temperatursensor.

In besonders bevorzugten Ausgestaltungen umfasst das mindestens eine Sensormittel die Referenzelektrode und den Temperatursensor. Weiterhin kann auch eine Kombination von Referenzelektrode und Drucksensor bevorzugt sein. Weiterhin kann eine Kombination des Temperatursensors mit dem Drucksensor bevorzugt sein. In besonders bevorzugter Weise ist eine Kombination von Referenzelektrode, Temperatursensor und Drucksensor bevorzugt.

Darüber hinaus kann das mindestens eine Sensormittel auch andere Sensormittel umfassen, beispielsweise Gassensoren, insbesondere zur Detektion verschiedener chemischer Substanzen, die gegebenenfalls in der Zelle freigesetzt werden. Gassensoren können beispielsweise auf einem optischen Messprinzip oder auf anderen Messprinzipien beruhen. Weiterhin können auch andere Sensoren, beispielsweise andere optische Sensoren, eingesetzt werden.

Mittels der Referenzelektrode ist die Messung eines Elektrodenpotentials der Zelle möglich. Elektrodenpotentiale sind eine wichtige Messgröße zur Beurteilung des Zustands der Zelle, beispielsweise des Ladezustands. Insbesondere kann so die Potentialdifferenz zwischen der Referenzelektrode und der negativen Elektrode und/oder der Referenzelektrode und der positiven Elektrode erfasst werden.

Mit Hilfe des Temperatursensors kann die Temperatur innerhalb der Zelle erfasst und überwacht werden. Die Temperatur erlaubt ebenfalls Rückschlüsse auf den Zustand der Zelle. Insbesondere kann eine übermäßige Erwärmung (Kernüberhitzung) festgestellt werden, die sich sehr nachteilig auf die Funktionsfähigkeit der Zelle auswirken kann. Weiterhin kann mittels eines Temperatursensors auch eine zu niedrige Temperatur festgestellt werden, die beispielsweise für einen Ladevorgang unvorteilhaft ist. Insbesondere erlaubt ein Temperatursensor ein thermisches Management der Zelle.

Bei dem Temperatursensor kann es sich um eine optische Sensorik, z.B. um einen Infrarotsensor, handeln. Der Temperatursensor kann aber auch ein Thermoelement oder einen elektronischen Temperatursensor, der in Abhängigkeit der Temperatur seinen Widerstand ändert, umfassen.

Mittels des Drucksensors kann insbesondere der Zellinnendruck (Wickeldruck) erfasst werden, der ebenfalls Rückschlüsse auf den Zustand der Zelle zulässt. Ein ansteigender Innendruck innerhalb der Zelle findet kann auf eine Zersetzung des Elektrolyten hindeuten, die mit einer entsprechenden Ausgasung verbunden ist, so dass der Gasdruck ansteigt.

In Bezug auf die Referenzelektrode ist die Zelle in bevorzugten Ausgestaltungen insbesondere durch mindestens eines der unmittelbar folgenden zusätzlichen Merkmale a. und b. gekennzeichnet:
a. Die Referenzelektrode ist in dem zentralen Hohlraum angeordnet.
b. Das Sensormittel umfasst mindestens ein Verbindungsmittel, über das von der Referenzelektrode ermittelte Messwerte an das Anzeige- und/oder Kontaktmittel übermittelt werden können.

In bevorzugten Ausgestaltungen sind hierbei die unmittelbar vorstehenden Merkmale a. und b. gemeinsam verwirklicht.

In einer besonders bevorzugten Ausgestaltung ist die Zelle in Bezug auf die Referenzelektrode durch das unmittelbar folgende Merkmal a. gekennzeichnet:
a. Die Referenzelektrode umfasst Lithium oder ein lithiumhaltiges Material und das mindestens eine Verbindungsmittel ist ein elektrischer Leiter.

Der elektrische Leiter steht in elektrischem Kontakt mit dem Lithium oder dem lithiumhaltigen Material, bevorzugt in unmittelbarem Kontakt.

Die Verwendung von Lithium oder einem lithiumhaltigen Material für die Referenzelektrode ist natürlich insbesondere dann vorteilhaft, wenn die erfindungsgemäße Zelle eine Lithium-Ionen-Zelle ist. Wie bereits erläutert, kann das definierte Potential von Lithium oder dem lithiumhaltigen Material als Referenz zur Messung einer Potentialdifferenz genutzt werden.

Weiterhin kann das Lithium oder das lithiumhaltige Material zugleich aber auch als Lithium-Depot dienen. Lithium-Ionen-Zellen sind auf die Verfügbarkeit von freiem Lithium bzw. Lithiumionen angewiesen, wobei der Gehalt an verfügbarem freiem Lithium (mobiles Lithium) im Laufe der Betriebsdauer der Zelle abnimmt. Durch eine zusätzliche Lithium-Quelle innerhalb einer Zelle kann daher die Lebensdauer einer Lithium-Ionen-Zelle verlängert werden. So ist es möglich, den Elektroden der Zelle bei Bedarf Lithium aus dem Depot zuzuführen oder aber zur Vermeidung von Lithium-Plating überschüssiges Lithium aus den Elektroden abzuführen. Hierzu kann die als Lithium-Depot dienende Elektrode, beispielsweise über den elektrischen Leiter, der auch als Verbindungsmittel dienen kann, gegen die negative oder gegen die positive Elektrode der Lithium-Ionen-Zelle geschaltet werden. Überschüssiges Lithium kann bei Bedarf dem Lithium-Depot zugeführt und dort abgelagert werden. Für diese Anwendungsfälle können Mittel vorgesehen sein, die ein separates Monitoring der Einzelpotentiale von Anode und Kathode in der Zelle und/oder eine externe Überwachung der Zellbalance über elektrochemische Analysen wie DVA (*differential voltage analysis*) ermöglichen.

Ein Ende des elektrischen Leiters steht bevorzugt mit der Referenzelektrode bzw. dem Lithium oder dem lithiumhaltigen Material der Referenzelektrode und ein weiteres Ende des elektrischen Leiters mit dem Anzeige- und/oder Kontaktmittel in elektrischem Kontakt. Die Referenzelektrode bildet neben dem positiven Pol und dem negativen Pol der Zelle einen dritten Pol der Zelle.

Der elektrische Leiter und die damit verbundene Referenzelektrode bzw. das Lithium-Depot müssen als dritter Pol gegen die beiden anderen Pole der Zelle, also die positive und die negative Elektrode sowie damit elektrisch gekoppelte Komponenten der Zelle, elektrisch isoliert sein.

Bei dem Lithium oder dem lithiumhaltigen Material der Referenzelektrode bzw. des Lithium-Depots kann es sich beispielsweise um metallisches Lithium, ein Lithium-Metall-Oxid, ein Lithium-Metall-Phosphat oder andere, dem Fachmann geläufige Materialien handeln. Zweckmäßigerweise stehen diese Materialien in Kontakt mit einem Elektrolyten. Die Ausführung der Referenzelektrode mit Lithium bzw. mit einem lithiumhaltigen Material ist insbesondere gut geeignet, um eine Lithium-Plattierung rechtzeitig zu erkennen und gegebenenfalls zu verhindern.

In Bezug auf den Temperatursensor ist die Zelle vorteilhafterweise durch mindestens eines der unmittelbar folgenden zusätzlichen Merkmale a. und b. gekennzeichnet:
a. Der Temperatursensor ist in dem zentralen Hohlraum angeordnet.
b. Das Sensormittel umfasst mindestens ein Verbindungsmittel, über das von dem Temperatursensor ermittelte Messwerte an das Anzeige- und/oder Kontaktmittel übermittelt werden können.

Vorteilhafterweise sind die unmittelbar vorstehenden Merkmale a. und b. gemeinsam verwirklicht.

Durch die Anordnung des Temperatursensors in dem zentralen Hohlraum des Wickels ist es möglich, dass die Temperatur im Zentrum der Zelle erfasst wird, so dass, beispielsweise im Vergleich mit Temperatursensoren am Gehäuse einer Zelle, besonders genaue und aussagekräftige Informationen über die Temperatur der Zelle gewonnen werden können.

Über das Verbindungsmittel können die mittels des Temperatursensors erfassbaren Sensordaten an das Anzeige- und/oder Kontaktmittel übertragen werden, so dass durch entsprechende Weiterleitung und/oder Auswertung der Daten ein Temperaturmanagement der Zelle möglich ist.

In besonders bevorzugten Ausgestaltungen in Bezug auf den Temperatursensor ist die Zelle durch das folgende Merkmal gekennzeichnet:
a. Der Temperatursensor ist ein temperaturabhängiger Widerstand oder umfasst einen temperaturabhängigen Widerstand und das mindestens eine Verbindungsmittel umfasst einen elektrischen Leiter.

Die Ausgestaltung des Temperatursensors als temperaturabhängiger Widerstand (beispielsweise ein NTC-Element (*Negative Temperature Coefficient Thermistor -* Heißleiter) oder ein PTC-Element (*Positive Temperature Coefficient Thermistor -* Kaltleiter) erlaubt eine besonders kostengünstige und dabei praktikable Realisierung eines Temperatursensors in der Zelle. NTC- und PTC-Elemente lassen sich in miniaturisierter Weise herstellen und eignen sich daher in besonderer Weise als Temperatursensormittel in der erfindungsgemäßen Zelle. Zweckmäßigerweise ist der temperaturabhängige Widerstand über elektrische Leiter, die den Temperatursensor mit dem Anzeige- und/oder Kontaktmittel verbunden.

Der axiale Hohlraum weist eine Länge auf, die in der Regel 85 bis 99 %, insbesondere 90 bis 99 %, des Abstandes der Stirnseiten des Zellgehäuses beträgt. Bevorzugt ist der Temperatursensor in einem zentralen Bereich des Hohlraums angeordnet, insbesondere in dem mittleren Drittel des Hohlraums. Durch diese Maßnahme wird erreicht, dass die erfassten Temperaturwerte die Temperatur an einem zentralen Punkt im Inneren des Wickels widerspiegeln.

Mit dem länglichen Hohlkörper kann in besonders vorteilhafter Weise eine Einbringung der oder des Sensormittels in das Innere der erfindungsgemäßen Zelle realisiert werden. Der längliche Hohlkörper übernimmt dabei gewissermaßen die Funktion eines Trägers für die Sensoren und/oder das mindestens eine Sensormittel.

Bei dem länglichen Hohlkörper kann es sich insbesondere um eine langgestreckte Röhre handeln, die bei der Fertigung der erfindungsgemäßen Zelle in den zentralen Hohlraum des Wickels eingeschoben wird oder auf der die Elektroden und der Separator aufgewickelt werden. Eine solche, oft als Wickelkern bezeichnete Röhre kann unter zyklischer Beanspruchung der Zellen eine Deformation des Wickels in den zentralen Hohlraum hinein verhindern und/oder unter Abuse-Bedingungen ein Kollabieren des Wickels vermeiden. So kann beispielsweise ein sich aufbauender Gasdruck über eine Berstmembran effizient abgebaut werden.

Der längliche Hohlkörper ist bevorzugt zumindest in einem Teilbereich, gegebenenfalls auch vollständig, als Hohlzylinder ausgebildet.

Der längliche Hohlkörper kann beispielsweise einen Außendurchmesser im Bereich zwischen 1 bis 10 mm, insbesondere zwischen 2 und 7 mm, vorzugsweise zwischen 2 und 5 mm aufweisen. Die Wandstärke des länglichen Hohlkörpers kann beispielsweise in einem Bereich zwischen 0,1 bis 1 mm liegen, beispielsweise bei 0,5 mm. So kann beispielsweise ein länglicher Hohlkörper mit einem Außendurchmesser von 3 mm einen Innendurchmesser von 2 mm aufweisen. In anderen Ausgestaltungen können die Abmessungen gegebenenfalls etwas größer sein, z. B. ein Außendurchmesser von 5 mm und ein Innendurchmesser von beispielsweise 4 mm.

Gemäß einer besonders bevorzugten Ausgestaltung der erfindungsgemäßen Zelle wird der längliche Hohlkörper, insbesondere in einer Ausgestaltung als Wickelkern, genutzt, um in besonders vorteilhafter Weise das mindestens eine Sensormittel oder Teile desselben in den zentralen Hohlraum des Wickels einzubringen. So kann beispielsweise der längliche Hohlkörper als Trägerkörper genutzt werden, um einen Temperatursensor und/oder eine Referenzelektrode in dem zentralen Hohlraum zu platzieren.

In Bezug auf den länglichen Hohlkörper, auch in seiner Ausgestaltung als Wickelkern, ist die erfindungsgemäße Zelle in bevorzugten Ausgestaltungen durch mindestens eines der folgenden zusätzlichen Merkmale gekennzeichnet:
a. Der längliche Hohlkörper besteht zumindest teilweise aus Glas und/oder Keramik und/oder Metall und/oder Kunststoff.
b. Der längliche Hohlkörper ist zumindest in Teilbereichen oder vollständig elektrisch leitend ausgebildet.
c. Der längliche Hohlkörper ist mit elektrisch leitfähigem Material zumindest teilweise beschichtet.
d. Der längliche Hohlkörper ist elektrisch von dem Gehäuse und/oder mindestens einer der Elektroden entkoppelt.
e. Der längliche Hohlkörper ist mit mindestens einer der Stirnseiten des Gehäuses dichtend verbunden.

Allgemein ist es vorteilhaft, wenn der längliche Hohlkörper aus einem elektrolytstabilen Material oder aus elektrolytstabilen Materialien wie Glas oder Edelstahl oder einem elektrolytstabilen Kunststoff wie Teflon gefertigt ist. Durch das elektrolytstabile Material des Hohlkörpers wird eine chemische Wechselwirkung des Elektrolyten mit dem Hohlkörper vermieden.

In besonders vorteilhafter Weise ist der längliche Hohlkörper gemäß dem vorstehenden Merkmal b. elektrisch leitend, wodurch eine elektrische Kontaktierung der oder des Sensormittels im Inneren des zentralen Hohlraums des Wickels mit dem stirnseitig angeordneten Anzeige- und/oder Kontaktmittel ohne zusätzliche elektrische Leiter realisiert werden kann. Hierfür kann der längliche Hohlkörper insbesondere aus Metall gemäß dem vorstehenden Merkmal a. gefertigt sein, beispielsweise aus Kupfer, Nickel, Edelstahl, Aluminium, Edelstahl, vernickeltem Stahl oder anderen Legierungen. In dieser Ausführungsform kann der Hohlkörper beispielsweise als elektrischer Leiter dienen, der die oben beschriebene Referenzelektrode bzw. das Lithium-Depot und/oder den Temperatursensor mit dem Anzeige- und/oder Kontaktmittel verbindet. In dieser Ausgestaltung kann beispielsweise ein Ende des länglichen Hohlkörpers, das in den zentralen Hohlraum des Wickels hineinragt, mit dem Material für die Referenzelektrode, beispielsweise dem metallischen Lithium oder dem lithiumhaltigen Material, beschichtet sein. Die elektrische Anbindung dieser Referenzelektrode kann dann über den elektrisch leitenden Hohlkörper erfolgen. In der Regel ist es dann allerdings erforderlich, den Hohlkörper gegenüber dem Zellgehäuse elektrisch zu isolieren, also gemäß dem unmittelbar vorstehenden Merkmal d. elektrisch von dem Gehäuse und/oder mindestens einer der Elektroden zu entkoppeln.

In anderen Ausführungen kann der längliche Hohlkörper gemäß Merkmal c. zur Realisierung einer elektrischen Leitfähigkeit auch mit einem elektrisch leitfähigen Material zumindest teilweise beschichtet sein, insbesondere, wenn der längliche Hohlkörper aus Glas und/oder Keramik gemäß dem vorstehenden Merkmal a. gefertigt ist. Auch auf diese Weise kann eine elektrische Anbindung der Sensormittel, die sich in oder an dem Hohlkörper befinden, ohne zusätzlichen elektrischen Leiter realisiert werden. Gegebenenfalls ist dann allerdings die Beschichtung oder der Hohlkörper samt Beschichtung gegenüber dem Zellgehäuse elektrisch zu isolieren.

Besonders vorteilhaft ist die elektrische Entkopplung des länglichen Hohlkörpers von dem Gehäuse und/oder mindestens einer, vorzugsweise beiden Elektroden der Zelle gemäß dem unmittelbar vorstehenden Merkmal d., vorzugsweise in Kombination mit dem unmittelbar vorstehenden Merkmal b. oder c.. Durch diese Maßnahme wird erreicht, dass die in der Zelle angeordnete Sensorik unabhängig von dem Spannungszustand und der Ladung der Zelle betrieben wird, so dass es beispielsweise nicht zu einer unbeabsichtigten Entladung der Zelle durch die Sensorik kommen kann.

Allgemein ist es vorteilhaft, wenn das vorliegend beschriebene mindestens eine Sensormittel mit einem eigenen Stromkreis betrieben wird, so dass die Speicher- und Ladungskapazitäten der Zelle selbst hiervon nicht beeinflusst werden.

Im Falle der Referenzelektrode als Sensormittel ist es zwingend vorgesehen, dass die Referenzelektrode, gegebenenfalls zusammen mit dem länglichen Hohlkörper, elektrisch von dem Gehäuse und den Elektroden entkoppelt ist.

Durch die dichtende Verbindung des länglichen Hohlkörpers mit mindestens einer der Stirnseiten des Gehäuses gemäß dem vorstehenden Merkmal e. wird eine besonders einfach zu realisierende Fertigung der erfindungsgemäßen Zelle ermöglicht, wobei das mindestens eine Sensormittel zusammen mit dem länglichen Hohlkörper während der Fertigung in das Innere des Wickels eingeschoben werden kann und die erforderliche Abdichtung des Gehäuses der Zelle durch die dichtende Verbindung des länglichen Hohlkörpers mit dem Gehäuse bzw. mit der Stirnseite des Gehäuses gewährleistet wird. Die dichtende Verbindung kann beispielsweise durch Einfügung eines Dichtmittels zwischen den Hohlkörper und das Gehäuse oder eine klebende, verschweißende, verlötende oder anderweitige Verbindung realisiert werden.

Insbesondere im Falle des Temperatursensors und/oder des Drucksensors als Sensormittel kann der längliche Hohlkörper auch elektrisch nichtleitend, beispielsweise also aus Glas und/oder Keramik gefertigt sein. In diesen Ausgestaltungen kann dann etwa der im Inneren des Wickels gegebenenfalls angeordnete Temperatursensor mit Hilfe von geeigneten elektrischen Leitern, die im Inneren oder entlang der Wand des länglichen Hohlkörpers zu dem Anzeige- und/oder Kontaktmittel geführt werden, elektrisch angebunden sein.

Im Fall des Temperatursensors kann es allerdings auch zweckmäßig sein, wenn über den länglichen Hohlkörper eine gute thermische Anbindung an das übrige Innere des Wickels gegeben ist, insbesondere sollten hierfür Materialien für den länglichen Hohlkörper verwendet werden, die einen guten Temperaturaustausch ermöglichen.

Der längliche Hohlkörper kann prinzipiell die gesamte Länge des zentralen Hohlraums des Wickels einnehmen. Es kann jedoch auch vorgesehen sein, dass der längliche Hohlkörper nur einen Teil der Länge des zentralen Hohlraums einnimmt, beispielsweise eine Länge im Bereich zwischen 50 und 80 % der Gesamtlänge des Wickels.

In einer weiteren besonders bevorzugten Ausgestaltung der erfindungsgemäßen Zelle ist die Zelle durch mindestens eines der unmittelbar folgenden zusätzlichen Merkmale a. und b. gekennzeichnet:
a. Der längliche Hohlkörper ist zur Temperierung der Zelle eingerichtet.
b. Der längliche Hohlkörper steht mit einer externen Temperierungseinrichtung in Kontakt.

In bevorzugter Weise sind die unmittelbar vorstehenden Merkmale a. und b. in Kombination realisiert.

In dieser Ausführungsform wird der längliche Hohlkörper als Kühl- und/oder Heizkörper genutzt, so dass in besonders vorteilhafter Weise ein Temperaturmanagement der Zelle möglich ist. Eine Heizbarkeit kann beispielsweise bei niedrigen Außentemperaturen sehr sinnvoll sein, da insbesondere für einen Ladevorgang der Zelle eine gewisse Mindesttemperatur erforderlich ist. Eine Kühlung kann insbesondere in solchen Fällen vorteilhaft sein, wenn eine übermäßige Erwärmung der Zelle stattfindet, die die weitere Funktion der Zelle negativ beeinflussen könnte. Bevorzugt besteht der Hohlkörper in dieser Ausführungsform zumindest teilweise aus Metall.

Prinzipiell ist eine Temperierung der Zelle mit oder gegebenenfalls auch ohne externe Temperierungseinrichtung auch ohne den in den zentralen Hohlkörper des Wickels eingebrachten länglichen Hohlkörper möglich. Der Einsatz eines länglichen Hohlkörpers im Inneren des Wickels ist für die Temperierung jedoch besonders vorteilhaft, da durch den länglichen Hohlkörper eine Kühlung unmittelbar im Zentrum des Wickels erfolgen kann. Die Kühlung kann eine aktive oder eine passive sein. Bei einer aktiven Kühlung sollte der Hohlkörper dazu ausgebildet sein, von einem Kühlmittel durchflossen zu werden. Beispielsweise eignet sich für den länglichen Hohlkörper und insbesondere den länglichen Hohlkörper in diesem Zusammenhang ein Metallröhrchen, das beispielsweise mit einer Wasserkühlung als externer Temperierungseinrichtung zur Temperierung der Zelle gekoppelt werden kann. Dieses Röhrchen bildet dabei gewissermaßen eine Verlängerung eines von außen angreifenden Kühlsystems in das Innere der Zelle hinein.

In Bezug auf den oben bereits beschriebenen Drucksensor ist die Zelle in bevorzugten Ausgestaltungen durch mindestens eines der unmittelbar folgenden Merkmale a. bis c. gekennzeichnet:
a. Der Drucksensor ist an einer der Stirnseiten des Gehäuses angeordnet.
b. Das Sensormittel umfasst einen in dem zentralen Hohlraum hineinragenden Hohlkörper, über den der von dem Gehäuse umschlossene Innenraum mit dem Drucksensor in kommunizierender Verbindung steht.
c. Der Drucksensor ist ein Piezo-Drucksensor.

In besonders bevorzugten Ausgestaltungen sind die unmittelbar vorstehenden Merkmale a. und b. in Kombination miteinander verwirklicht. Besonders bevorzugt ist eine Kombination der unmittelbar vorstehenden Merkmale a., b. und c.

Bei dem Hohlkörper gemäß dem vorstehenden Merkmal b. handelt es sich bevorzugt um die oben beschriebene bevorzugte Ausführungsform des Hohlkörpers. Dieser Hohlköper ist vorliegend bevorzugt also ein in dem zentralen Hohlraum angeordnetes Teil eines Sensormittels, nämlich des Drucksensors. Der Hohlkörper kann genutzt werden, um Druckänderungen im Inneren des Hohlraums an den stirnseitig positionierten Drucksensor zu kommunizieren.

Durch die kommunizierende Verbindung des in den zentralen Hohlraum hineinragenden Hohlkörpers mit dem an einer der Stirnseiten des Gehäuses angeordneten Drucksensor kann mittels des Drucksensors der Druck im Inneren des Wickels erfasst werden. Ein ansteigender Innendruck, der durch einen sich aufbauenden Gasdruck innerhalb der Zelle zustande kommen kann, ist mit der Gefahr eines Zerreißens oder Berstens der Zelle verbunden. Insofern stellt eine Drucküberwachung eine wichtige Überwachungsgröße dar, um gegebenenfalls eine Druckentlastung oder Ähnliches zur Vermeidung von Gefährdungen einleiten zu können.

Bei dem Piezo-Drucksensor, der in bevorzugten Ausgestaltungen als Drucksensor eingesetzt werden kann, handelt es sich um ein kostengünstiges Bauteil, das sich in besonders bevorzugter Weise für die erfindungsgemäße Zelle eignet.

In einer möglichen Weiterbildung ist die Zelle in Bezug auf den Drucksensor durch mindestens eines der unmittelbar folgenden Merkmale a. bis c. gekennzeichnet:
a. Der Drucksensor begrenzt den Hohlkörper.
b. Der Hohlkörper ist ein länglicher Hohlkörper, dessen eines Ende von dem Drucksensor begrenzt wird.
c. Der Hohlkörper weist mindestens eine Öffnung zum druckausgleichenden Kontakt mit dem Wickel auf.

In bevorzugten Ausgestaltungen sind die unmittelbar vorstehenden Merkmale a. und b. und insbesondere die Merkmale a., b. und c. gemeinsam verwirklicht.

Durch die Begrenzung des Hohlkörpers, der sich im zentralen Hohlraum des Wickels befindet, durch den Drucksensor wird in besonders einfacher und praktikabler Weise die kommunizierende Verbindung zwischen dem Innenraum des Hohlkörpers und dem Drucksensor realisiert.

Für den Hohlkörper eignet sich in besonderer Weise die Form einer langgestreckten Röhre, die in den zentralen Hohlraum des Wickels eingeschoben werden kann.

Es ist in dieser Ausführungsform vorteilhaft, wenn der Hohlkörper mindestens eine Öffnung aufweist, über die sein Inneres mit dem Innenraum des Zellgehäuses verbunden ist und über die ein Druckausgleich zwischen seinem Inneren und dem von dem Zellgehäuses umschlossenen Raum, in dem der Wickel angeordnet ist, erfolgen kann. Die Öffnung oder die Öffnungen in dem Hohlkörper können dabei im Prinzip in beliebiger Weise gestaltet sein. Beispielsweise kann das Ende des Hohlkörpers, beispielsweise das Ende der langgestreckten Röhre, das in das Innere der Zelle bzw. in das Innere des Wickels ragt, offen gestaltet sein. Zusätzlich oder in alternativen Ausgestaltungen können ein oder mehrere Löcher oder andere Öffnungen in der Wandung des Hohlkörpers vorgesehen sein. Hierbei kann es sich beispielsweise um Mikrolöcher handeln, wobei die gesamte Fläche der Löcher beispielsweise im Bereich zwischen 0,1 bis 10 mm², beispielsweise ungefähr 0,5 mm², betragen kann. Maßgeblich für die Ausgestaltung der mindestens einen Öffnung in dem Hohlkörper ist, dass ein möglichst unmittelbarer Druckausgleich zwischen dem Bereich des Wickels und dem Inneren des Hohlkörpers stattfindet.

In einigen weiteren Ausführungsformen ohne Drucksensor ist das Innere des Hohlkörpers allerdings bevorzugt druckdicht isoliert und nicht über Öffnungen und /oder Durchbrechungen mit sonstigen Hohlräumen in der Zelle verbunden.

Bei dem Anzeige- und/oder Kontaktmittel kann es sich im einfachsten Fall um einen elektrischen Kontakt handeln, der von außerhalb des Zellgehäuses abgegriffen werden kann und der elektrisch mit dem mindestens einen Sensormittel, z.B. der Referenzelektrode, verbunden ist.

In einer besonders bevorzugten Ausgestaltung der erfindungsgemäßen Zelle ist die Zelle durch eines der unmittelbar folgenden zusätzlichen Merkmale a. und b. gekennzeichnet:
a. Das Anzeige- und/oder Kontaktmittel umfasst eine PCB-Platine.
b. Das Anzeige- und/oder Kontaktmittel ist eine PCB-Platine.
c. Das Anzeige- und/oder Kontaktmittel ist auf einer PCB-Platine angeordnet.

Bei einer PCB-Platine (*Printed Circuit Board*) handelt es sich um eine Leiterplatte, die als Träger für elektronische Bauteile fungiert. Eine derartige Leiterplatte besteht im Allgemeinen aus elektrisch isolierendem Material, das mit Leiterbahnen versehen ist, die beispielsweise aus dünnen Kupferschichten geätzt sind. Bei dem elektrisch isolierenden Material kann es sich beispielsweise um einen Glasfaserverbund, z. B. auf der Basis von Epoxidharz, handeln.

Eine derartige PCB-Platine bildet oder umfasst in besonders bevorzugten Ausgestaltungen das Anzeige- und/oder Kontaktmittel der erfindungsgemäßen Zelle oder ist Teil des Anzeige- und/oder Kontaktmittels. In diesen Ausgestaltungen ist das oder sind die Sensormittel mit der PCB-Platine direkt oder indirekt kontaktiert. Die PCB-Platine kann hierbei einen Teil des Gehäuses, insbesondere die Stirnseite oder einen Teil der Stirnseite des Gehäuses der Zelle bilden oder stirnseitig an dem Gehäuse angebracht sein.

Das Anzeige- und/oder Kontaktmittel kann auch der erwähnte, von außerhalb des Zellgehäuses abgreifbare Kontakt sein, wobei der Kontakt auf der PCB-Platine angeordnet ist.

Über eine Verschaltung des mindestens einen Sensormittels mit der PCB-Platine kann in einfacher Weise eine Anbindung an weitere externe Einheiten, insbesondere an eine externe Auswerteeinheit und/oder an ein externes Managementsystem der Zelle, in einfacher Weise realisiert werden.

Prinzipiell sind alternativ zu einer PCB-Platine auch andere Kontakt- und/oder Anzeigemittel zur Anzeige und/oder Übertragung der mittels der Sensormittel erfassbaren Messwerte möglich.

In besonders bevorzugten Ausgestaltungen der Zelle ist die Zelle in Bezug auf die PCB-Platine durch mindestens eines der unmittelbar folgenden zusätzlichen Merkmale a. und b. gekennzeichnet:
a. Die PCB-Platine weist eine zentrale Aussparung oder Durchbrechung zur Aufnahme mindestens eines Sensormittels und/oder eines länglichen Hohlkörpers gemäß der obigen Beschreibung auf.
b. Die PCB-Platine ist dichtend mit einem umgebenden Bereich der Stirnseite oder mit dem umgebenden Gehäusemantel verbunden.

In besonders bevorzugten Ausgestaltungen sind die unmittelbar vorstehenden Merkmale a. und b. miteinander kombiniert.

Bei einem klassischen bzw. herkömmlichen Aufbau einer Zelle in Form einer zylindrischen Rundzelle oder einer Knopfzelle ist in der Regel an einer Stirnseite des Zellgehäuses ein Verschluss mittels eines Deckels vorgesehen. Diese Seite wird nachstehend als Verschlussseite bezeichnet. Die andere Stirnseite bildet den Gehäuseboden.

Es ist bevorzugt, dass das Anzeige- und/oder Kontaktmittel, insbesondere die PCB-Platine, an dem Gehäuseboden angeordnet ist oder einen Teil des Gehäusebodens bildet, insbesondere in diesen integriert ist.

Es kann entsprechend auch vorteilhaft sein, das mindestens eine Sensormittel und gegebenenfalls den länglichen Hohlkörper über den Boden des Gehäuses in das Innere bzw. den zentralen Hohlkörper des Wickels einzubringen und über bodenseitige Kontakt- und/oder Anzeigemittel nach außen anzubinden, wobei diese Anbindung vorzugsweise über die beschriebene PCB-Platine auf der bodenseitigen Stirnseite erfolgen kann.

Grundsätzlich ist allerdings auch eine Integration des mindestens einen Sensormittels und/oder des Anzeige- und/oder Kontaktmittels an oder in die Verschlussseite möglich.

In besonders bevorzugter Weise ist die PCB-Platine mit einer Aussparung oder Durchbrechung versehen, in die das mindestens eine Sensormittel und/oder das mindestens eine Teil des Sensormittels und/oder der längliche Hohlkörper eingebracht und aufgenommen werden kann. In diesen Fällen ist zweckmäßigerweise eine Abdichtung dieser zentralen Aussparung oder Durchbrechung und ebenfalls eine Abdichtung der PCB-Platine gegenüber dem umgebenden Bereich der Stirnseite oder dem angrenzenden Gehäusemantel vorgesehen, um die Funktion der Zelle zu gewährleisten, die ein dichtes Gehäuse voraussetzt.

In besonders bevorzugten Ausgestaltungen ist die erfindungsgemäße Zelle durch mindestens eines der unmittelbar folgenden Merkmale gekennzeichnet:
a. Die Zelle ist eine Lithium-Ionen-Zelle.
b. Die Zelle ist eine zylindrischen Rundzelle.
c. Die Zelle ist eine Knopfzelle.

Hierbei ist insbesondere eine Kombination der unmittelbar vorstehenden Merkmale a. und b. oder eine Kombination der unmittelbar vorstehenden Merkmale a. und c. besonders bevorzugt.

Erfindungsgemäße Zellen sind besonders bevorzugt Lithium-Ionen-Zellen, insbesondere sekundäre Lithium-Ionen-Zellen. Lithium-Ionen-Zellen zeichnen sich durch besonders hohe Energiedichten aus und sind daher für verschiedene Anwendungen mit hohem Energiebedarf, beispielsweise im Automobilbereich, mit besonderem Vorteil einsetzbar. Ungeachtet dessen kann es sich bei der erfindungsgemäßen Zelle auch um eine Zelle auf anderer Basis handeln, beispielsweise um eine Nickel-Metallhydrid-Zelle.

Allgemein werden die Elektroden von Lithium-Ionen-Zellen üblicherweise von Kompositelektroden gebildet, die in der Regel jeweils einen elektrisch leitenden Stromkollektor sowie elektrochemisch aktive Komponenten (oft auch als Aktivmaterialien bezeichnet) und elektrochemisch inaktive Komponenten umfassen. Dies ist auch bei der vorliegenden Erfindung vorgesehen.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien. Sie können auch strukturiert vorliegen, beispielsweise gelocht oder gestreckt, oder sie können aus einem Metallschaum oder aus einem Metallnetz oder einem Metallgitter oder einem metallisierten Vlies gebildet sein. Der Stromkollektor der negativen Elektrode kann beispielsweise aus Metallen wie Kupfer oder Nickel gebildet sein und/oder aus einer elektrisch leitfähigen Folie gebildet sein. Für den Stromkollektor der positiven Elektrode kommen als Grundmaterialien beispielsweise Aluminium oder Titan in Frage.

In den oben genannten Fällen, in denen der Zelle bei Bedarf Lithium aus einem Lithium-Depot zugeführt oder aber zur Vermeidung von Lithium-Plating überschüssiges Lithium aus den Elektroden abgeführt wird, ist es bevorzugt, dass die Stromkollektoren durchlässig für Lithiumionen sind. Hierzu können die Stromkollektoren beispielsweise Durchbrechungen aufweisen oder es können als Stromkollektoren metallische oder metallisierte Vliese oder offenporige Schäume verwendet werden, insbesondere aber auch gelochte oder auf sonstige Weise mit Durchbrechungen strukturierte Folien.

Als Aktivmaterialien kommen für die Elektroden der sekundären Lithium-Ionen-Zellen sämtliche Materialien in Frage, die Lithiumionen aufnehmen und wieder abgeben können. So können für die negative Elektrode insbesondere Materialien auf Kohlenstoffbasis wie graphitischer Kohlenstoff oder zur Interkalation von Lithium befähigte nicht-graphitische Kohlenstoffmaterialien eingesetzt werden. Auch Lithiumtitanat (Li₄Ti₅O₁₂) ist als Aktivmaterial geeignet. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für die positive Elektrode der sekundären Lithium-Ionen-Zellen kommen beispielsweise Lithium-Metalloxid-Verbindungen und Lithium-Metallphosphat-Verbindungen wie LiCoO₂ und Li-FePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Mischungen der genannten Materialien können eingesetzt werden.

Als elektrochemisch inaktive Komponenten sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Übliche Elektrodenbinder basieren beispielsweise auf Polyvinylidenfluorid, Polyacrylat oder Carboxymethylcellulose. Leitmittel wie Ruß dienen dazu, die elektrische Leitfähigkeit der Elektroden zu erhöhen.

Als Separatoren kommen für die Lithium-Ionen-Zellen insbesondere poröse Kunststofffolien in Frage, beispielsweise aus einem Polyolefin oder aus einem Polyetherketon. Auch Vliese und Gewebe aus diesen Materialien können zum Einsatz kommen.

Als ionenleitenden Elektrolyten können die Lithium-Ionen-Zellen beispielsweise eine Mischung organischer Carbonate, in der ein Lithiumsalz gelöst ist, enthalten. Hierfür kommt im Grunde jedes Lithiumsalz in Frage, das aus dem Stand der Technik für Lithium-Ionen-Zellen bekannt ist. Ein prominentes Beispiel hierfür ist Lithiumhexafluorophosphat (LiPF₆). Bevorzugt sind die Elektroden und Separatoren der Lithium-Ionen-Zellen mit dem Elektrolyten getränkt.

Allgemein eignet sich die beschriebene Integration einer Sensorik für verschiedene Arten von Zellen, sofern deren Anode und Kathode in Form eines Wickels mit einem zentralen Hohlraum angeordnet sind.

Gemäß dem vorstehenden Merkmal b. handelt es sich in besonders bevorzugten Ausführungsformen der erfindungsgemäßen Zelle bei der Zelle um eine zylindrische Rundzelle.

Zylindrische Rundzellen weisen in Abgrenzung zu Knopfzellen eine Höhe auf, die größer als ihr Durchmesser ist. Sie eignen sich zur Versorgung moderner Metering-, Sicherheits- und Automotiveapplikationen wie z.B. Strom-, Wasser-, Gaszähler, Heizkostenverbrauchsmessgeräte, medizinische Pipetten, Sensoren und Alarmsysteme, Hausalarmsysteme, Sensoren und Sensor-Netzwerke, Backupbatterien für Diebstahlschutzsysteme im Automobilbau mit elektrischer Energie.

Bevorzugt liegt die Höhe der Rundzellen im Bereich von 15 mm bis 150 mm. Der Durchmesser der zylindrischen Rundzellen liegt bevorzugt im Bereich von 10 mm bis 50 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen und Werkzeugen.

Die Nennkapazität der als zylindrische Rundzelle ausgebildeten erfindungsgemäßen Zelle beträgt in einer Ausführungsform als Lithium-Ionen-Zelle in der Regel bis zu 6000 mAh. Mit dem Formfaktor von 21 x 70 hat die Zelle in einer Ausführungsform als Lithium-Ionen-Zelle bevorzugt eine Nennkapazität im Bereich von 2000 mAh bis 5000 mAh, besonders bevorzugt im Bereich von 3000 bis 4500 mAh.

In der Europäischen Union sind Herstellerangaben zu Angaben betreffend die Nennkapazitäten von sekundären Zellen und Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der erwähnte freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 2 m, bevorzugt von nicht mehr als 1,5 m,
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 3 m, bevorzugt von nicht mehr als 2,5 m,
auf.

Alternativ kann es sich bei der erfindungsgemäßen Zelle gemäß dem vorstehenden Merkmal c. um eine Knopfzelle handeln. Knopfzellen sind zylindrisch ausgebildet und weisen in Abgrenzung zu zylindrischen Rundzellen eine Höhe auf, die geringer als ihr Durchmesser ist. Sie eignen sich insbesondere zur Versorgung von kleinen elektronischen Geräten wie Uhren, Hörgeräten und kabellosen Kopfhörern mit elektrischer Energie.

Allgemein weisen Knopfzellen eine kreisrunde Oberseite auf, die zumindest in einem zentralen Teilbereich eben ausgebildet ist, und eine kreisrunde Unterseite, die zumindest in einem zentralen Teilbereich eben ausgebildet ist, und einen dazwischen liegenden ringförmigen Mantel. Der kürzeste Abstand zwischen einem Punkt auf dem ebenen Bereich oder Teilbereich der Oberseite und einem Punkt auf dem Bereich oder Teilbereich der Unterseite liegt bevorzugt im Bereich von 4 mm bis 15 mm (Höhe der Knopfzelle). Der maximale Abstand zwischen zwei gegenüberliegenden Punkten auf dem Mantel der Knopfzelle liegt bevorzugt im Bereich von 5 mm bis 25 mm (Durchmesser der Knopfzelle). Es gilt hierbei die Maßgabe, dass der maximale Abstand zwischen den zwei Punkten auf der Mantelseite größer ist als der Abstand zwischen den zwei Punkten auf der Ober- und der Unterseite. Im Unterschied zu einer zylindrischen Rundzelle ist die Gesamthöhe der Knopfzelle also im Allgemeinen kleiner als der Gesamtdurchmesser.

Die Nennkapazität der als Knopfzelle ausgebildeten erfindungsgemäßen Zelle beträgt in einer Ausführungsform als Lithium-Ionen-Zelle in der Regel bis zu 1500 mAh. Bevorzugt liegt die Nennkapazität im Bereich von 100 mAh bis 1000 mAh, besonders bevorzugt im Bereich von 100 bis 800 mAh.

Knopfzellen mit durch spiralförmiges Aufwickeln von bandförmigen Elektroden und mindestens einem bandförmigen Separator gefertigten Wickeln auf Lithiumionen-Basis sind beispielsweise aus der WO 2010/146154 A2, der WO 2012/048995 A1 und der WO 2010/089152 A1 bekannt.

Zylindrische Rundzellen und Knopfzellen können vorzugsweise ein zylindrisches Gehäuse aufweisen, das z.B. aus vernickeltem Stahl oder aus Edelstahl besteht. Das Gehäuse umfasst meist zwei metallische Gehäuseteile, zwischen denen eine elektrisch isolierende Dichtung angeordnet ist. Eines der Gehäuseteile steht in elektrischer Verbindung mit der von dem Gehäuse umschlossenen positiven Elektrode und ist entsprechend positiv gepolt. Das andere Gehäuseteil steht in elektrischer Verbindung mit der von dem Gehäuse umschlossenen negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und auch einem Eindringen von Flüssigkeit, Feuchtigkeit oder Gasen aus dem oder in das Gehäuse entgegenwirken.

### Besondere Ausgestaltungen des Wickels

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Vorzugsweise werden zur Herstellung des Elektroden-Separator-Verbunds die bandförmigen Elektroden gemeinsam mit dem oder den bandförmigen Separatoren einer Wickelvorrichtung zugeführt und in dieser bevorzugt um eine Wickelachse herum spiralförmig aufgewickelt. Alternativ können die Elektroden und die Separatoren auch zu dem Verbund kombiniert und dann aufgewickelt werden. In einigen Ausführungsformen werden die Elektroden und der Separator hierzu auf einen hohlzylindrischen Wickelkern aufgewickelt, der auf einem Wickeldorn sitzt und nach dem Wickeln im Wickel verbleibt. Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Der Wickel weist bevorzugt eine zylindrische Kontaktblechbauteil beziehungsweise eine hohlzylindrische Geometrie auf.

Es ist bevorzugt, dass die Längsränder des oder der Separatoren die endständigen Stirnseiten des als Wickel ausgebildeten Elektroden-Separator-Verbunds bilden. Es ist weiterhin bevorzugt, dass die aus den endständigen Stirnseiten des Wickels austretenden Längsränder des Anodenstromkollektors und/oder des Kathodenstromkollektors nicht mehr als 5000 µm, bevorzugt nicht mehr als 3500 µm, aus den Stirnseiten herausragen.

Besonders bevorzugt ragt der Längsrand des Anodenstromkollektors aus der Stirnseite des Wickels nicht mehr als 2500 µm, besonders bevorzugt nicht mehr als 1500 µm, heraus. Besonders bevorzugt ragt der Längsrand des Kathodenstromkollektors aus der Stirnseite des Wickels nicht mehr als 3500 µm, besonders bevorzugt nicht mehr als 2500 µm, heraus.

Innerhalb des Elektroden-Separator-Verbunds sind die Elektroden derart angeordnet, dass der erste Längsrand des Anodenstromkollektors aus einer der endständigen Stirnseiten des Elektroden-Separator-Verbunds austritt und der erste Längsrand des Kathodenstromkollektors aus der anderen endständigen Stirnseite des Elektroden-Separator-Verbunds austritt. Hierzu können die Anode und die Kathode innerhalb des Elektroden-Separator-Verbunds versetzt zueinander angeordnet sein.

Es ist besonders bevorzugt, dass die erfindungsgemäße elektrochemische Zelle zwei metallische Kontaktblechbauteile umfasst, von denen eines mit den freien Randstreifen der Anodenstromkollektoren durch Verschweißung verbunden ist und das andere mit den freien Randstreifen der Kathodenstromkollektoren durch Verschweißung verbunden ist.

### Besondere Ausgestaltungen der Stromkollektoren

Die Stromkollektoren der erfindungsgemäßen Zelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Geeignet als Metall für den Anodenstromkollektor sind beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich Aluminium oder auch andere elektrisch leitfähige Materialien, darunter auch Aluminiumlegierungen. Auch hier kommt weiterhin auch Edelstahl in Frage, beispielsweise vom Typ 1.4404.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

In besonders bevorzugten Ausführungsformen umfasst der Kathodenstromkollektor Aluminium oder aus einer Aluminiumlegierung oder besteht aus dem Aluminium oder der Aluminiumlegierung. Weiterhin umfasst der Anodenstromkollektor vorzugsweise Aluminium oder eine Aluminiumlegierung oder besteht aus dem Aluminium oder der Aluminiumlegierung.

Insbesondere der anodenseitige Einsatz von Stromkollektoren aus Aluminium kann Vorteile gegenüber einer Verwendung von beispielsweise kupferbasierten Stromkollektoren bringen. Da Aluminium leichter ist als Kupfer, kann hierdurch die Energiedichte der Zelle signifikant gesteigert werden. Darüber hinaus können solche Zellen sehr stabil gegenüber Tiefentladung sein und eine verringerte Tendenz zur Bildung von Dendriten aufweisen.

Besonders bevorzugt kann die Oberfläche der Stromkollektoren, insbesondere der Stromkollektoren auf Basis von Aluminium oder der Aluminiumlegierung, mit einer Kohlenstoffschicht beschichtet sein, insbesondere um den Kontaktwiderstand zu reduzieren. Die Schicht ist bevorzugt wenige nm bis einige µm dick und kann beispielsweise durch eine Abscheidung aus der Gasphase, beispielsweise durch ein CVD-Verfahren (CVD = *chemical vapour deposition*), oder ein Sprühverfahren gebildet werden.

Neben Folien können als Stromkollektoren auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Wenn im Zusammenhang mit den Stromkollektoren von einer Aluminium-, Kuper- oder Nickellegierung gesprochen wird, so ist damit vorzugsweise eine Legierung gemeint, die einen Gehalt von mindestens 70 Gew.-%, bevorzugt von mindestens 90 Gew.-%, des jeweiligen Basismetalls Aluminium, Kupfer oder Nickel aufweist.

### Besondere Ausgestaltungen des Gehäuses

In besonders bevorzugten Ausführungsformen der elektrochemischen Zellen zeichnet sich die Zelle dadurch aus, dass das Gehäuse, das den Elektroden-Separator-Verbund umschließt, ein metallisches, rohrförmig ausgebildetes Gehäuseteil mit einer endständigen kreisförmigen Öffnung aufweist. In dem Gehäuse ist der als Wickel ausgebildete Elektroden-Separator-Verbund vorzugsweise axial ausgerichtet, so dass der Wickelmantel an der Innenseite des rohrförmig ausgebildeten Gehäuseteils anliegt.

In einigen besonders bevorzugten Ausführungsformen verschließt das Kontaktblechbauteil oder eines der Kontaktblechbauteile das Gehäuse oder zumindest eine Öffnung des Gehäuses. Es kann zu diesem Zweck einen kreisförmigen Rand aufweisen. Bevorzugt verschließt das Kontaktblechbauteil vorzugsweise die endständige kreisförmige Öffnung des rohrförmig ausgebildeten Gehäuseteils. Das Kontaktblechbauteil dient also nicht nur zum elektrischen Kontaktieren einer Elektrode, vielmehr fungiert es gleichzeitig als Gehäuseteil. Damit geht ein großer Vorteil einher, eine separate elektrische Verbindung zwischen dem Kontaktblechbauteil und einem Gehäuseteil ist nämlich nicht mehr erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser hervorragende Entwärmungseigenschaften.

### Besondere Ausgestaltungen der Kontaktblechbauteile

Weiterhin ist es bevorzugt, dass das Kontaktblechbauteil eine Metallscheibe ist oder umfasst, deren Rand dem kreisförmigen Rand des Kontaktblechbauteils entspricht oder diesen mitbildet. Die Metallscheibe kann derart in dem rohrförmig ausgebildeten Gehäuseteil angeordnet sein, dass ihr Rand entlang einer umlaufenden Kontaktzone an der Innenseite des rohrförmig ausgebildeten Gehäuseteils anliegt. Weiterhin kann der Rand der Metallscheibe mit dem rohrförmig ausgebildeten Gehäuseteil über eine umlaufende Schweiß- oder Lötnaht verbunden sein. Der eine der ersten Längsränder kann mit dem Kontaktblechbauteil, insbesondere mit der Metallscheibe, durch Verschweißung verbunden sein.

Bevorzugt liegt die Metallscheibe flach auf dem ersten Längsrand auf, so dass sich eine linienartige Kontaktzone ergibt, die im Falle der spiralförmig aufgewickelten Elektroden einen spiralförmigen Verlauf aufweist. In einigen Ausführungsformen kann der erste Längsrand auch umgebogen oder deformiert sein.

Damit der Rand der Metallscheibe an der Innenseite des rohrförmig ausgebildeten Gehäuseteils entlang der umlaufenden Kontaktzone anliegen kann, ist es bevorzugt, dass das rohrförmige Gehäuseteil zumindest in dem Abschnitt, in dem der Rand der Metallscheibe anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes des Kontaktblechbauteils, insbesondere an den Außendurchmesser der Metallscheibe, angepasst.

Die Verschweißung des Randes der Metallscheibe mit dem rohrförmig ausgebildeten Gehäuseteil kann insbesondere mittels eines Lasers durchgeführt werden. Alternativ wäre es aber auch möglich, die Metallscheibe durch eine Verlötung oder eine Verklebung zu fixieren.

Ein separates Dichtelement wird bei einer umlaufenden Schweiß- oder Lötnaht nicht benötigt.

Die Metallscheibe und das rohrförmige Gehäuseteil sind über die Schweißnaht oder die Verlötung dichtend miteinander verbunden. Darüber hinaus gewährleistet die Schweiß- oder die Lötverbindung auch eine nahezu widerstandfreie elektrische Verbindung zwischen der Metallscheibe und dem rohrförmigen Gehäuseteil. Die Metallscheibe und das rohrförmige Gehäuseteil weisen in diesem Fall die gleiche Polarität auf.

In einer weiteren bevorzugten Weiterbildung ist oder umfasst das Kontaktblechbauteil eine Metallscheibe, deren Rand dem kreisförmigen Rand des Kontaktblechbauteils entspricht oder diesen mitbildet, wobei eine ringförmige Dichtung aus einem elektrisch isolierenden Material den kreisförmigen Rand des Kontaktblechbauteils, insbesondere der Metallscheibe, umschließt. Weiterhin kann die Metallscheibe derart in dem rohrförmig ausgebildeten Gehäuseteil angeordnet sein, dass die ringförmige Dichtung entlang einer umlaufenden Kontaktzone an der Innenseite des rohrförmig ausgebildeten Gehäuseteils anliegt.

In dieser Ausführungsform wird also vorgeschlagen, als Kontaktblechbauteil eines mit einem kreisförmigen Rand einzusetzen, auf den kreisförmigen Rand des Kontaktblechbauteils eine ringförmige Dichtung aus einem elektrisch isolierenden Material aufzuziehen und mit dem Kontaktblechbauteil die endständige kreisförmige Öffnung des rohrförmig ausgebildeten Gehäuseteils zu verschließen.

Der Verschluss der Zelle kann in diesem Fall beispielsweise durch einen Bördel- oder einen Crimpvorgang erfolgen, wobei die Dichtung bevorzugt komprimiert wird.

Bei der Dichtung selbst kann es sich um eine übliche Kunststoffdichtung handeln, die chemisch beständig gegenüber den jeweils verwendeten Elektrolyten sein sollte. Dem Fachmann sind geeignete Dichtungsmaterialien bekannt.

Die Verschlussvariante mit der ringförmigen Dichtung aus dem elektrisch isolierenden Material führt dazu, dass das Kontaktblechbauteil gegenüber dem rohrförmig ausgebildeten Gehäuseteil elektrisch isoliert ist. Es bildet einen elektrischen Pol der Zelle. Bei der Verschlussvariante, bei der der Rand der Metallscheibe mit dem rohrförmig ausgebildeten Gehäuseteil über eine umlaufende Schweiß- oder Lötnaht verbunden ist, besitzen das rohrförmig ausgebildete Gehäuseteil und das Kontaktblechbauteil die gleiche Polarität.

Das Kontaktblechbauteil kann aus mehreren Einzelteilen, darunter die Metallscheibe, bestehen. In einigen besonders bevorzugten Ausführungsformen ist die Metallscheibe das Kontaktblechbauteil.

In der einfachsten Ausführungsformen handelt es sich bei der Metallscheibe um ein flaches Blechteil mit kreisförmigem Umfang, das sich nur in einer Ebene erstreckt. In vielen Fällen können aber auch aufwendigere Gestaltungen bevorzugt sein. So kann die Metallscheibe profiliert sein, beispielsweise um ihr Zentrum eine oder mehrere kreisförmige Vertiefungen und/oder Erhöhungen, bevorzugt in konzentrischer Anordnung, aufweisen, was beispielsweise in einem wellenförmigen Querschnitt resultieren kann. Es ist auch möglich, dass ihre Innenseite einen oder mehrere Stege bzw. lineare Vertiefungen und/oder Erhöhungen aufweist. Weiterhin kann die Scheibe einen Rand aufweisen, der radial nach innen umgebogen ist, so dass sie einen doppellagigen Randbereich mit beispielsweise U-förmigem Querschnitt aufweist, oder radial um 90° umgebogen ist, so dass ein L-förmiger Querschnitt resultiert.

In besonders bevorzugter Weise kann die Metallscheibe auf einer ihrer zwei Seiten mindestens eine rinnenförmige und/oder punktförmige Vertiefung aufweisen, die auf ihrer anderen Seite als mindestens eine linienförmige und/oder punktförmige Erhöhung hervortritt. Die Seite mit der mindestens einen Erhöhung kann dabei in unmittelbarem Kontakt mit dem einen der ersten Längsränder stehen. Weiterhin kann die mindestens eine Erhöhung und der eine der ersten Längsränder über mindestens einen Schweiß- oder Lötpunkt und/oder mindestens eine Schweiß- oder Lötnaht verbunden sein. Bevorzugt ist der Längsrand also unmittelbar an die mindestens eine Erhöhung geschweißt oder gelötet.

In einigen Ausführungsformen kann der eine der ersten Längsränder durch den Kontakt mit der mindestens einen Erhöhung umgebogen oder deformiert sein.

Weiterhin kann es bevorzugt sein, dass Sicken als längliche Vertiefungen eingebracht sind. In einer bevorzugten Weiterbildung der Metallscheibe der erfindungsgemäßen Zelle kann die Metallscheibe auf einer ihrer Seiten mehrere rinnenförmige Vertiefungen in vorzugsweise sternförmiger Anordnung aufweisen, wobei die Vertiefungen auf ihrer anderen Seite als linienförmige Erhöhungen hervortreten. Weiterhin kann die Metallscheibe in jeder der rinnenförmigen Vertiefungen mindestens eine Schweiß- oder Lötnaht aufweisen, vorzugsweise zwei parallele Schweißnähte, in Folge einer Verschweißung der Metallscheibe mit dem einen der ersten Längsränder. Durch die sternförmige Anordnung sowie gegebenenfalls die Doppelschweißnaht ist eine gute und vor allem gleichmäßige Anbindung der Metallscheibe an den einen der ersten Längsränder gewährleistet.

Das Konzept der Verschweißung der Ränder von Stromkollektoren mit Kontaktblechbauteilen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktblechbauteilen, insbesondere auch von scheibenförmigen Kontaktblechbauteilen, mit den Rändern von Stromkollektoren wird daher auf den Inhalt der WO 2017/215900 A1 und der JP 2004-119330 A vollumfänglich Bezug genommen.

### Besondere Ausgestaltungen des Gehäuses mit Gehäusebecher

Wie oben ausgeführt, zeichnet sich das Gehäuse der erfindungsgemäßen Zelle in einer bevorzugten Ausführungsform dadurch aus, dass es ein metallisches, rohrförmig ausgebildetes Gehäuseteil mit einer endständigen kreisförmigen Öffnung umfasst, wobei das Kontaktblechbauteil einen kreisförmigen Rand umfasst und die endständige kreisförmige Öffnung des rohrförmig ausgebildeten Gehäuseteils verschließt und der eine der ersten Längsränder mit dem Kontaktblechbauteil durch Verschweißung verbunden ist.

In einer besonders bevorzugten Weiterbildung zeichnet sich die erfindungsgemäße Zelle hinsichtlich ihres Gehäuses dadurch aus, dass das rohrförmig ausgebildete Gehäuseteil Bestandteil eines metallischen Gehäusebechers ist, der einen kreisförmigen Boden umfasst. Dabei kann es vorgesehen sein, dass der andere der ersten Längsränder unmittelbar an dem Boden anliegt und mit dem Boden bevorzugt durch Verschweißung verbunden ist.

Diese Variante eignet sich vor allem für Zellen gemäß der oben beschriebenen Verschlussvariante mit der ringförmigen Dichtung aus dem elektrisch isolierenden Material. Kommt die Verschlussvariante, bei der der Rand der Metallscheibe mit dem rohrförmig ausgebildeten Gehäuseteil über eine umlaufende Schweiß- oder Lötnaht verbunden ist, zum Einsatz, wird in der Regel eine Poldurchführung benötigt.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung der Längsränder eines Stromkollektors an den Boden eines Gehäusebechers, wie es hier vorgeschlagen wird.

Gemäß der vorliegenden Erfindung ist es also möglich und in einigen Ausführungsformen bevorzugt, die aus gegenüberliegenden Stirnseiten eines als Wickel ausgebildeten Elektroden-Separator-Verbunds austretenden Stromkollektorränder von positiver und negativer Elektrode jeweils unmittelbar an ein Gehäuseteil, nämlich den Boden des Bechers und das oben beschriebene, als Verschlusselement fungierende Kontaktblechbauteil, anzukoppeln. Die Nutzung des verfügbaren Innenvolumens des Zellgehäuses für aktive Komponenten nähert sich so ihrem theoretischen Optimum.

### Bevorzugte Ausgestaltungen der Gehäusematerialien

Die Wahl des Materials, aus dem der Gehäusebecher, das Kontaktblechbauteil und dessen mögliche Bestandteile gefertigt werden, hängt meist davon ab, ob der Anoden- oder der Kathodenstromkollektor an das jeweilige Gehäuseteil angebunden ist. Bevorzugt sind grundsätzlich die gleichen Materialien, aus denen die Stromkollektoren selbst gefertigt werden. Die genannten Gehäuseteile können beispielsweise aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin können das Gehäuse und dessen Komponenten aus mehrschichtigen Materialien (engl.: *Clad Materials*) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen beispielsweise die Innenseite des Gehäusebechers bzw. des Bodens des Gehäusebechers. Weitere geeignete Materialien sind dem Fachmann bekannt.

In einer besonders bevorzugten Ausführungsform zeichnet sich die erfindungsgemäße Zelle dadurch aus, dass das Kontaktblechbauteil Aluminium oder eine Aluminiumlegierung umfasst oder aus dem Aluminium oder der Aluminiumlegierung besteht. Der Anodenstromkollektor kann in dieser Ausgestaltung mit dem Kontaktblechbauteil durch Verschweißung verbunden sein und der Kathodenstromkollektor kann mit dem Verschlusselement durch Verschweißung verbunden sein.

Diese Ausführungsform ist insbesondere dann bevorzugt, wenn auch der Anodenstromkollektor und der Kathodenstromkollektor jeweils aus Aluminium oder einer Aluminiumlegierung bestehen.

Wenn im Zusammenhang mit den Gehäusematerialien von einer Aluminium-, Kuper- oder Nickellegierung gesprochen wird, so ist damit vorzugsweise eine Legierung gemeint, die einen Gehalt von mindestens 70 Gew.-%, bevorzugt von mindestens 90 Gew.-%, des jeweiligen Basismetalls Aluminium, Kupfer oder Nickel aufweist.

### Weitere besondere Ausgestaltungen der Zelle

In einer besonders bevorzugten Ausführungsform der Erfindung zeichnet sich die erfindungsgemäße Zelle dadurch aus, dass eine Stirnseite des Gehäuses und vorzugsweise das Kontaktblechbauteil ein Sicherheitsventil aufweist, über das bei Überschreiten eines weiteren Druckschwellwerts Druck aus dem Gehäuse entweichen kann.

Bei diesem Sicherheitsventil kann es sich beispielsweise um eine Berstmembran, ein Berstkreuz oder eine ähnliche Sollrissstelle handeln, die bei einem definierten Überdruck in der Zelle aufreißen kann, um eine Explosion der Zelle zu verhindern. Besonders bevorzugt kann die Metallscheibe des Kontaktblechbauteils das Sicherheitsventil, insbesondere in Form einer Sollrissstelle, aufweisen.

In einer besonders bevorzugten Ausgestaltung der erfindungsgemäßen Zelle ist die Zelle Bestandteil eines Batteriemoduls umfassend mehrere, bevorzugt gleichartige, elektrisch miteinander verschaltete elektrochemische Zellen. Derartige Batteriemodule eignen sich insbesondere für Anwendungen im Automobilbereich. Insbesondere bei solchen Anwendungen, die mit einer hohen Leistungsaufnahme und einer hohen Leistungsabgabe verbunden sind, sind zuverlässige Überwachungssysteme sinnvoll und wichtig, um irreguläre Betriebszustände rechtzeitig erkennen und gegebenenfalls beheben zu können.

Ein Verfahren zur Herstellung der beschriebenen Zelle ist insbesondere durch die folgenden Schritte gekennzeichnet:
a. Es wird ein zylindrischer Wickel mit einem zentralen Hohlraum bereitgestellt, der einen spiralförmig aufgewickelten Verbund aus mindestens einer bandförmigen negativen Elektrode, mindestens einem Separator und mindestens einer bandförmigen positiven Elektrode umfasst.
b. Es wird ein becherförmiges Gehäuseteil bereitgestellt, welches einen ringförmigen Gehäusemantel, einen Gehäuseboden und eine stirnseitige Öffnung aufweist.
c. Der Wickel wird durch die stirnseitige Öffnung in das Gehäuseteil eingeschoben.
d. Die stirnseitige Öffnung wird durch ein zweites, bevorzugt scheibenförmiges Gehäuseteil verschlossen, beispielsweise mit Hilfe eines Bördelprozesses.
e. Der Wickel wird mit einem Elektrolyten getränkt.
f. In den zentralen Hohlraum des Wickels wird mindestens ein Sensormittel oder mindestens ein Teil eines Sensormittels eingebracht, das Zustandsänderungen des Wickels qualitativ und/oder quantitativ erfassen kann.
g. Am Gehäuseboden wird ein Anzeige- und/oder Kontaktmittel angeordnet, das von dem mindestens einen Sensormittel erfasste Messwerte anzeigen und/oder über das diese Messwerte an eine Empfangs- und/oder Auswerteeinheit übertragen werden können.

Die angegebenen Schritte müssen keinesfalls in der angegebenen Reihe ausgeführt werden. So ist es beispielsweise möglich, das Anzeige- und/oder Kontaktmittel vor oder nach dem Einschieben des Wickels am Gehäuseboden anzuordnen. Auch das Einbringen des Sensormittels kann vor oder nach dem Einschieben des Wickels am Gehäuseboden erfolgen. Das Tränken des Wickels mit Elektrolyt muss gleichfalls nicht zwingend vor dem Einbringen des Sensormittels oder nach dem Schließen der stirnseitigen Öffnung erfolgen. Im Allgemeinen ist es allerdings bevorzugt, den Wickel mit dem Elektrolyten zu versehen, nachdem der Wickel in das Gehäuse eingebracht wurde.

Bezüglich bevorzugter Ausgestaltungen der in den Verfahrensschritten verwendeten Zellkomponenten wird zur Vermeidung von Wiederholungen auf die obige Beschreibung der erfindungsgemäßen Zelle verwiesen.

Die negative Elektrode und die positive Elektrode werden bevorzugt nach den vorstehenden Schritten c. und d., bevorzugt jedoch vor Schritt e., elektrisch mit dem Gehäuse oder mit durch das Gehäuse führbaren elektrischen Leitern kontaktiert.

In besonders bevorzugten Ausgestaltungen des Herstellungsverfahrens ist es vorgesehen, dass das mindestens eine Sensormittel oder der mindestens eine Teil eines Sensormittels zusammen mit dem oben beschriebenen länglichen Hohlkörper und insbesondere mit dem oben beschriebenen länglichen Hohlkörper in den zentralen Hohlraum des Wickels eingebracht und insbesondere eingeschoben wird. Diese Maßnahme erlaubt eine besonders einfache Fertigung der Zelle mit verhältnismäßig wenigen Handgriffen, so dass dieses Herstellungsverfahren in besonderer Weise einer automatisierten Fertigung zugänglich ist.

Das oder die Sensormittel oder Teile von Sensormitteln werden vorzugsweise über eine zentrale Aussparung oder Durchbrechung in einer der Stirnseiten des Gehäuses, insbesondere in dem Gehäuseboden, in das Innere bzw. in den zentralen Hohlraum des Wickels eingebracht. In besonders bevorzugter Weise geschieht diese Einbringung des oder der Sensormittel oder Teile des oder der Sensormittel zusammen mit dem gegebenenfalls vorgesehenen länglichen Hohlkörper, der in den zentralen Hohlraum des Wickels eingeschoben wird. Die zentrale Aussparung oder Durchbrechung kann sich beispielsweise innerhalb der gegebenenfalls vorgesehenen PCB-Platine befinden, die als Teil des Gehäusebodens oder als Gehäuseboden das Gehäuse abschließen kann und dabei das Kontakt- und/oder Anzeigemittel der Zelle in der oben beschriebenen Weise bildet.

In einer besonders bevorzugten Ausgestaltung des Herstellungsverfahrens wird diese zentrale Öffnung in dem Gehäuseboden und gegebenenfalls in der PCB-Platine genutzt, um den Elektrolyten zu dosieren bzw. in das Innere der Zelle einzubringen. In diesem Zusammenhang kann es beispielsweise vorgesehen sein, dass zuerst der Elektrolyt eindosiert wird und dann der längliche Hohlkörper in das Innere bzw. in den zentralen Hohlraum des Wickels eingebracht wird. Dann wird das Gehäuse am Gehäuseboden dichtend verschlossen. Dies kann beispielsweise durch Kleben, Löten oder Verschweißen der vorhandenen Fugen und Kontaktbereiche vorgenommen werden.

Die übrige Fertigung der Zelle, beispielsweise eine Bördelung des Deckels und anderes, kann in an sich bekannter Weise erfolgen, wie es insbesondere bei zylindrischen Rundzellen oder Knopfzellen bekannt ist.

Die Anordnung des gegebenenfalls vorgesehenen Drucksensors kann beispielsweise auf der Oberfläche der gegebenenfalls vorgesehenen PCB-Platine oder in der Aussparung oder Durchbrechung in der PCB-Platine erfolgen, wobei dieser Drucksensor in bevorzugter Weise mit dem Inneren des als Hohlkörper ausgestalteten gegebenenfalls vorgesehenen länglichen Hohlkörpers in kommunizierender Verbindung steht, so dass Druckschwankungen oder Druckänderungen aus dem Inneren des Wickels direkt an den Drucksensor übertragen werden.

Die Integration der Sensormittel oder der Teile des Sensormittels in das Innere des Wickels kann statt mit einer stirnseitig angeordneten PCB-Platine auch in anderer Weise beispielsweise mittels einer Kunststoffdichtung oder einer Glas-Metall-Durchführung realisiert werden.

Die der PCB-Platine weist bevorzugt Kontakte auf, die in an sich bekannter Weise abgegriffen werden können. Zur Weiterverarbeitung und/oder Auswertung der Signale kann beispielsweise eine drahtgebundene oder drahtlose Verbindung zu weiteren Auswerte- und/oder Verarbeitungseinheiten vorgesehen sein kann. Die Kontaktstellen der PCB-Platine können beispielsweise in üblicher Weise verdrahtet werden, um eine Signalleitung an externe Einheiten zu bewerkstelligen. Die Signalweiterleitung kann gegebenenfalls auch drahtlos erfolgen, wobei im Allgemeinen eine drahtgebundene Signalweiterleitung aufgrund des geringeren Energiebedarfs bevorzugt ist.

Auf diese Weise kann beispielsweise ein zentrales Batteriemanagementsystem bei einer Verschaltung von einer Mehrzahl einzelner, erfindungsgemäßer Zellen realisiert werden. Beispielsweise können zwischen zehn und tausend, beispielsweise hundert, einzelne Zellen miteinander verschaltet und mit einem gemeinsamen Batteriemanagement- und Überwachungssystem überwacht und gesteuert werden.

Bei dem Zusammenbau kann die PCB-Platine beispielsweise in eine gegebenenfalls vorgesehene entsprechende kreisförmige Aussparung des metallischen Gehäuses, insbesondere auf der Bodenseite des Gehäuses, eingesetzt werden. Nach Einbringung der Sensormittel und gegebenenfalls des länglichen Hohlkörpers und gegebenenfalls des Elektrolyten kann die Platine abdichtend verklebt, verschweißt oder beispielsweise gelötet werden. Neben der Funktion der Kontaktierung und gegebenenfalls Anzeige und/oder Weiterleitung von Signalen übernimmt die PCB-Platine dabei zusätzlich auch eine abdichtende Funktion.

Bei der Ausgestaltung Zelle mit dem mindestens einen Kontaktblechbauteil kann für die Einbringung der oder des Sensormittels oder der Teile eines Sensormittels in das Innere bzw. in den zentralen Hohlraum des Wickels eine zentrale Aussparung in einem der der Kontaktblechbauteile vorgesehen sein.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen schematisch:
- Fig. 1: Darstellung einer zylindrischen Rundzelle mit einem röhrenförmigen länglichen Hohlkörper im zentralen Hohlraum der Rundzelle;
- Fig. 2: Schnittdarstellung einer Ausführungsform einer erfindungsgemäßen Zelle;
- Fig. 3: Schnittdarstellung einer weiteren Ausführungsform einer erfindungsgemäßen Zelle als Ausschnitt; und
- Fig. 4: Schnittdarstellung einer weiteren Ausführungsform einer erfindungsgemäßen Zelle als Ausschnitt.
- Fig. 5: Schnittdarstellung einer erfindungsgemäßen zylindrischen Rundzelle mit Kontaktblechbauteilen.

### DETAILLIERTE BESCHREIBUNG DER AUSFÜHRUNGSBEISPIELE

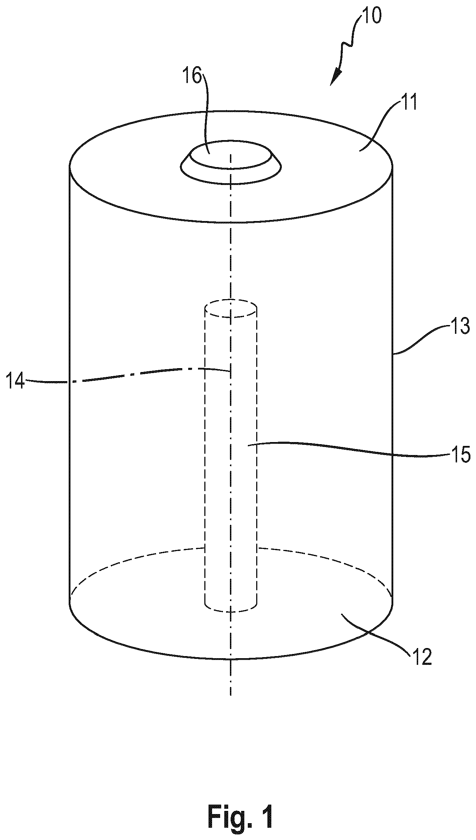

**Fig. 1** zeigt als schematische Außenansicht eine zylindrische Rundzelle 10, wobei in dieser Darstellung die näheren Details zur Anordnung der Sensormittel gemäß der Erfindung nicht dargestellt sind. Die Zelle 10 umfasst ein Gehäuse mit einer ersten (deckelseitigen) Stirnseite 11 und einer zweiten (bodenseitigen) Stirnseite 12 sowie mit einem ringförmigen Gehäusemantel 13. Die Stirnseite 11 umfasst den positiven Pol 16 der Zelle 10. Die bodenseitige Stirnseite 12 bildet den negativen Pol der Zelle.

Dieses Gehäuse ist zur Aufnahme eines Wickels, der aus einem Verbund aus mindestens einer negativen Elektrode, mindestens einem Separator und mindestens einer positiven Elektrode gebildet ist vorgesehen. Der Wickel kann beispielsweise mit Hilfe von zusätzlichen Klebebändern stabilisiert sein. Der Verbund aus den Elektroden und dem Separator ist um eine in Fig. 1 als gestrichelte Linie 14 angedeutete Wickelachse gewickelt. Diese Wickelachse 14 durchläuft einen zentralen Hohlraum, der von dem hier nicht gezeigten Wickel umfasst ist. In diesem zentralen Hohlraum ist ein länglicher Hohlkörper 15 angeordnet. Dieser Hohlkörper 15 kann erfindungsgemäß zur Aufnahme von einem oder mehreren Sensormitteln vorgesehen sein oder kann selbst Teil eines Sensormittels sein.

In anderen Ausgestaltungen der erfindungsgemäßen Zelle kann auf einen solchen Hohlkörper 15 verzichtet werden, wobei in jedem Fall in dem zentralen Hohlraum, der von dem Wickel umfasst ist, mindestens ein Sensormittel oder mindestens ein Teil eines Sensormittels angeordnet wird.

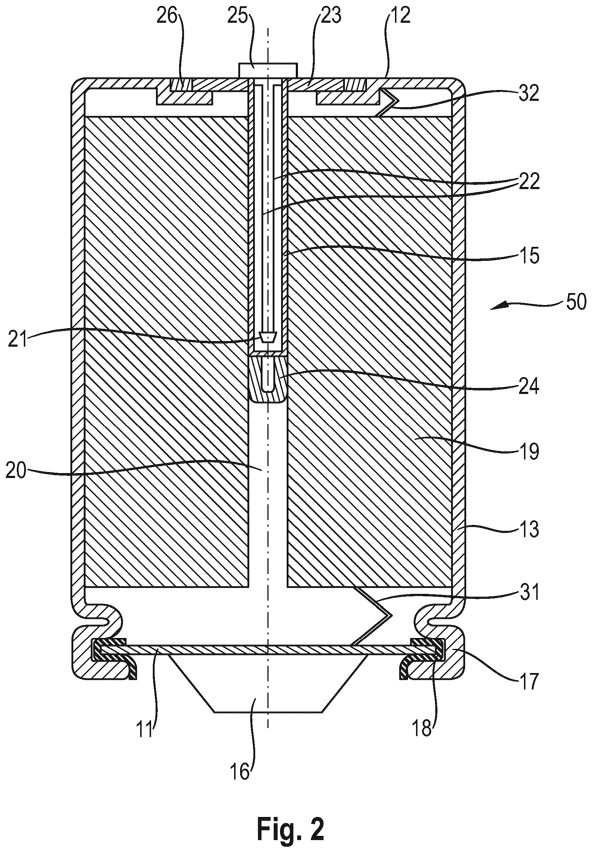

**Fig. 2** zeigt eine erfindungsgemäße Zelle 50 im Querschnitt mit weiteren Details. Die Elemente, die den in Fig. 1 erläuterten Elementen entsprechen, sind mit den gleichen Bezugszeichen versehen. In dieser Darstellung ist die bodenseitige Stirnseite 12 oben dargestellt. Der Deckel 11 ist mittels Bördelung 17 an dem Gehäusemantel 13 fixiert. Die Dichtung 18 isoliert den Deckel 11 von dem Gehäusemantel 13. Innerhalb des Gehäuses befindet sich der Wickel 19. Eine der Elektroden des Wickels 19 ist über den Leiter 31 elektrisch mit dem Deckel 11 und damit auch mit dem Pol 16 verbunden. Die zweite Elektrode des Wickels 19 ist über den Leiter 32 elektrisch mit der bodenseitigen Stirnseite 12 verbunden.

Der Wickel 19 umfasst den zentralen Hohlraum 20. Innerhalb des zentralen Hohlraums 20 ist der längliche Hohlkörper 15 angeordnet. Innerhalb des Hohlkörpers 15 befindet sich ein NTC-Element als Temperatursensor 21. Der Temperatursensor 21 wird über ein Paar elektrische Leiter 22 nach außen geführt und kontaktiert eine PCB-Platine 23, die Teil der bodenseitigen Stirnseite 12 des Gehäuses ist.

In dieser Ausgestaltung übernimmt der längliche Hohlkörper 15 zusätzlich die Funktion einer Referenzelektrode 24, indem an dem Ende des Hohlkörpers 15, der der Stirnseite 12 abgewandt ist, eine metallische Beschichtung mit einem definierten Potential vorgesehen ist, vorzugsweise eine Beschichtung mit metallischem Lithium oder gegebenenfalls mit einem anderen lithiumhaltigen Material.

In dieser Ausgestaltung als Referenzelektrode besteht der längliche Hohlkörper 15 bevorzugt aus einem metallischen Werkstoff, beispielsweise aus Kupfer, oder weist beispielsweise durch eine Beschichtung mit entsprechendem Material eine elektrische Leitfähigkeit auf, so dass mittels der Referenzelektrode 24 im Bereich der Stirnseite 12 eine absolute Spannungsdifferenz zwischen der Referenzelektrode 24 und der Anode oder der Kathode des Wickels 19 abgegriffen werden kann.

Weiterhin ist in dieser Ausgestaltung auf der PCB-Platine 23 ein Drucksensor 25 angeordnet, der in kommunizierender Verbindung mit dem Inneren des Hohlkörpers 15 steht. Hierbei ist der Hohlkörper 15 mit mindestens einer hier nicht näher dargestellten Öffnung versehen, so dass ein Druckausgleich zwischen dem Innenraum des länglichen Hohlkörpers 15 und dem umgebenden Innenraum innerhalb der Zelle 50 stattfindet.

Im Zusammenhang mit dem Drucksensor 25 stellt der Hohlkörper 15 also einen Teil des Sensormittels dar, da der sich gegebenenfalls ändernde Druck innerhalb der Zelle 50 über den Hohlkörper 15 an den an der Stirnseite befindlichen Drucksensor 25 weitergeleitet wird.

Die PCB-Platine ist dichtend in eine entsprechende Aussparung der bodenseitigen Stirnseite 12 des Gehäuses eingefügt, wobei eine umlaufende Dichtung 26 vorgesehen ist. In anderen Ausgestaltungen kann stattdessen beispielsweise eine Verklebung, Verschweißung, Verlötung oder Ähnliches vorgesehen sein.

Die Verwendung einer PCB-Platine 23 als Kontakt- und/oder Anzeigemittel für die Sensorik bietet eine leicht zu realisierende und vorteilhafte Ausgestaltungsmöglichkeit für die Kontaktierung der Sensorik. Gleichfalls ist es auch möglich, statt der PCB-Platine 23 beispielsweise eine vergleichbare Platte aus Glas oder Kunststoff oder Ähnlichem zu verwenden und eine anderweitige Kontaktierung der Sensorik vorzusehen.

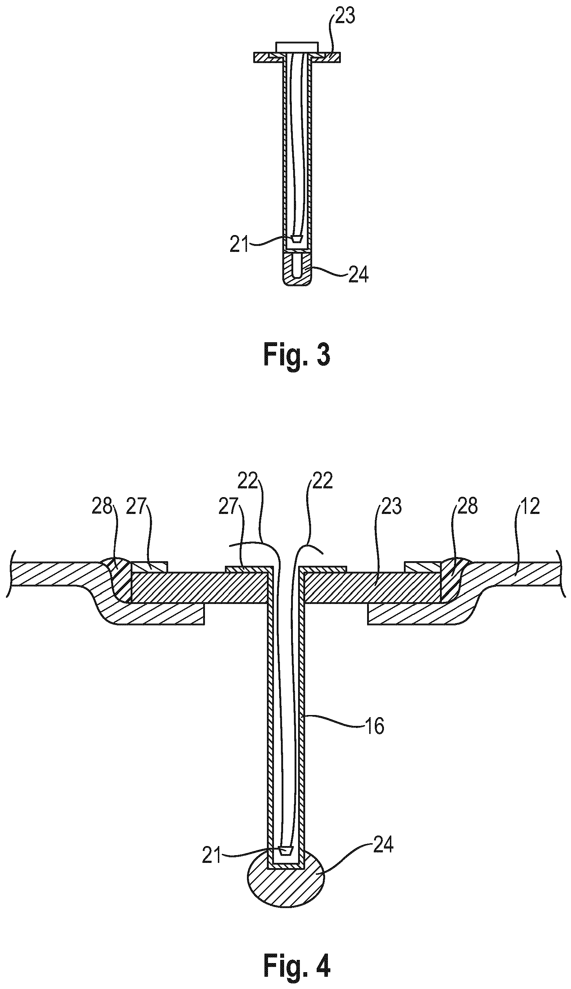

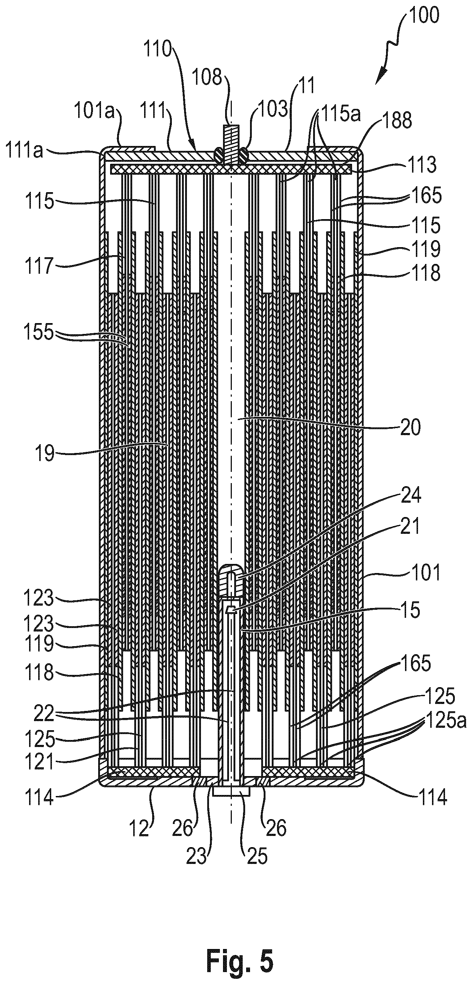

**Fig. 3** zeigt einen Ausschnitt im Hinblick auf die Sensorik aus einer erfindungsgemäßen Zelle, die weitgehend mit der Zelle 50 in Fig. 2 oder der nachfolgend anhand von Fig. 5 erläuterten Zelle 100 vergleichbar ist. Im Unterschied hierzu ist bei der in Fig. 3 gezeigten Ausgestaltung kein Drucksensor vorgesehen. Die hier gezeigte Zelle umfasst eine Kombination einer Referenzelektrode 24 und eines NTC-Elements als Temperatursensor 21, die an eine stirnseitige PCB-Platine 23 oder ein vergleichbares Element angebunden sind. Der hier gezeigt Ausschnitt zeigt im Prinzip die Elemente, die bei der Fertigung einer erfindungsgemäßen Zelle in den zentralen Hohlraum des Wickels der Zelle eingeschoben werden können, um so die Sensorik in die Zelle zu integrieren.

**Fig. 4** illustriert ebenfalls einen Ausschnitt aus einer erfindungsgemäßen Zelle mit einer hier tropfenförmig ausgestalteten Referenzelektrode 24 und einem NTC-Element als Temperatursensor 21. Diese Sensormittel sind an bzw. in dem länglichen und Hohlkörper 15 angeordnet. Die Zu- und Ableitungen 22 des Temperatursensors 21 werden nach außen geführt und sind für eine Kontaktierung mit den Leiterstrukturen 27 der PCB-Platine 23 vorgesehen.

Die PCB-Platine 23 ist in eine entsprechende Aussparung oder Durchbrechung der bodenseitigen Stirnseite 12 der Zelle eingesetzt und beispielsweise mit Lötzinn 28 oder einem Klebstoff oder einer anderweitigen Abdichtung dichtend in das Gehäuse eingefügt.

Die in **Fig. 5** dargestellte Zelle 100 zeigt eine Zelle mit Kontaktblechbauteilen, bei der die aus dem Wickel 19 herausragenden Längsränder 115a, 125a der Stromkollektoren unmittelbar an stirnseitig angeordneten Kontaktblechbauteilen 113 und 114 angebunden sind. Darüber hinaus umfasst der Wickel 19 vergleichbar mit der Fig. 2 den zentralen Hohlraum 20. Innerhalb des zentralen Hohlraums 20 ist der längliche Hohlkörper 15 angeordnet. Innerhalb des Hohlkörpers 15 befindet sich ein NTC-Element als Temperatursensor 21. Der Temperatursensor 21 wird über ein Paar elektrische Leiter 22 nach außen geführt und kontaktiert eine PCB-Platine 23, die Teil der bodenseitigen Stirnseite 12 des Gehäuses ist.

In dieser Ausgestaltung übernimmt der längliche Hohlkörper 15 zusätzlich die Funktion einer Referenzelektrode 24, indem an dem Ende des Hohlkörpers 15, der der Stirnseite 12 abgewandt ist, eine metallische Beschichtung mit einem definierten Potential vorgesehen ist, vorzugsweise eine Beschichtung mit metallischem Lithium oder gegebenenfalls mit einem anderen lithiumhaltigen Material.

In dieser Ausgestaltung als Referenzelektrode besteht der längliche Hohlkörper 15 bevorzugt aus einem metallischen Werkstoff, beispielsweise aus Kupfer, oder weist beispielsweise durch eine Beschichtung mit entsprechendem Material eine elektrische Leitfähigkeit auf, so dass mittels der Referenzelektrode 24 im Bereich der Stirnseite 12 eine Spannungsdifferenz zwischen der Referenzelektrode 24 und der Anode oder der Kathode des Wickels 19 abgegriffen werden kann.

Weiterhin ist in dieser Ausgestaltung auf der PCB-Platine 23 ein Drucksensor 25 angeordnet, der in kommunizierender Verbindung mit dem Inneren des Hohlkörpers 15 steht. Hierbei ist der Hohlkörper 15 mit mindestens einer hier nicht näher dargestellten Öffnung versehen, so dass ein Druckausgleich zwischen dem Innenraum des länglichen Hohlkörpers 15 und dem umgebenden Innenraum innerhalb der Zelle 100 stattfindet.

Im Zusammenhang mit dem Drucksensor 25 stellt der Hohlkörper 15 also einen Teil des Sensormittels dar, da der sich gegebenenfalls ändernde Druck innerhalb der Zelle 100 über den Hohlkörper 15 an den an der Stirnseite befindlichen Drucksensor 25 weitergeleitet wird.

Die PCB-Platine ist dichtend in eine entsprechende Aussparung der bodenseitigen Stirnseite 12 des Gehäuses eingefügt, wobei eine umlaufende Dichtung 26 vorgesehen ist. In anderen Ausgestaltungen kann stattdessen beispielsweise eine Verklebung, Verschweißung, Verlötung oder Ähnliches vorgesehen sein.

Die Verwendung einer PCB-Platine 23 als Kontakt- und/oder Anzeigemittel für die Sensorik bietet eine leicht zu realisierende und vorteilhafte Ausgestaltungsmöglichkeit für die Kontaktierung der Sensorik. Gleichfalls ist es auch möglich, statt der PCB-Platine 23 beispielsweise eine vergleichbare Platte aus Glas oder Kunststoff oder Ähnlichem zu verwenden und eine anderweitige Kontaktierung der Sensorik vorzusehen.

Die weiteren Details der Zelle 100 sind nachfolgend erläutert.

Die Zelle 100 umfasst ein hohlzylindrisch ausgebildetes Gehäuseteil 101, das zusammen mit dem Boden 12 und dem Deckel 11 das Gehäuse der Zelle bildet. Der Deckel 111 ist als Metallscheibe mit kreisrunden Umfang ausgebildet. Im Bereich des Deckels 11 weist das Gehäuseteil 101 eine kreisförmige Öffnung (definiert durch den Rand 101a) auf, die durch den Deckel 11 verschlossen wird. Das Gehäuse der Zelle schließt einen Innenraum ein, in dem ein als hohlzylindrischer Wickel 19 ausgebildeter Elektroden-Separator-Verbund axial ausgerichtet ist. Der Deckel 111 ist derart in dem rohrförmig ausgebildeten Gehäuseteil 101 angeordnet, dass ihr Rand 111a entlang einer umlaufenden Kontaktzone an der Innenseite des rohrförmig ausgebildeten Gehäuseteils 101 anliegt. Der Rand 111a ist mit dem rohrförmig ausgebildeten Gehäuseteil 101 über eine umlaufende Schweiß- oder Lötnaht verbunden. Der Rand 101a des rohrförmig ausgebildeten Gehäuseteils 101 ist radial (hier um ca. 90 °) nach innen über den Rand der Metallscheibe 111 umgebogen.

Der Elektroden-Separator-Verbund liegt in Form eines zylindrischen Wickels 19 mit zwei endständigen Stirnseiten vor, zwischen denen sich ein umlaufender Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind. Die zwei Stirnseiten des Elektroden-Separator-Verbunds bzw. des Wickels 19 werden durch die Längsränder der Separatoren 118 und 119 gebildet. Aus diesen Stirnseiten ragen die Stromkollektoren 115 und 125 heraus. Der Kathodenstromkollektor 125 kann beispielsweise aus Aluminium bestehen. Der Anodenstromkollektor 115 kann beispielsweise aus Kupfer, Nickel oder Aluminium bestehen.

Aus der oberen Stirnseite des Elektroden-Separator-Verbunds tritt der Anodenstromkollektor 115 aus, aus der unteren Stirnseite der Kathodenstromkollektor 125. Der Anodenstromkollektor 115 ist in einem streifenförmigen Hauptbereich mit einer Schicht aus einem negativen Elektrodenmaterial 155 beladen. Der Kathodenstromkollektor 125 ist in einem streifenförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier als optionale Maßnahme eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die optionale Beschichtung 165 aus dem keramischen Stützmaterial aufgebracht.

Der Deckel 111 ist über den Polstift 108 elektrisch mit dem Kontaktblechbauteil 110 verbunden. Das metallische Kontaktblechbauteil 113 umfasst zwei Seiten, von denen eine, im Bild die obenliegende, in Richtung des Deckels 111 weist. An der anderen Seite des Kontaktblechbauteils 113, hier der untenliegenden Seite, steht der Längsrand 115a über seine gesamte Länge in unmittelbarem Kontakt mit dem Kontaktblechbauteil 113 und damit in elektrischem Kontakt mit dem Deckel 111, und ist mit diesem durch Verschweißung verbunden.

In bevorzugten Ausführungsformen bilden der Deckel 111, das Kontaktblechbauteil 113 und der Polstift gemeinsam eine Deckelbaugruppe 110, die in einem Schritt verbaut werden kann.

Der Polstift 108 ist an das Kontaktblechbauteil 113 geschweißt oder gelötet und durch eine zentrale Durchbrechung in der Metallscheibe 111 aus dem Gehäuse der Zelle 100 herausgeführt. Die Deckelbaugruppe 110 umfasst weiterhin das Isoliermittel 103, das den Polstift 108 und somit auch das mit dem Polstift verschweißte oder verlötete Kontaktblechbauteil 113 gegen den Deckel 111 elektrisch isoliert. Lediglich der Deckel 111 steht in unmittelbarem und damit auch in elektrischem Kontakt mit dem Gehäuseteil 101. Der Polstift 108 und das Kontaktblechbauteil 113 sind gegen den Gehäusebecher isoliert.

Der Rand 125a des Kathodenstromkollektors 125 steht, bevorzugt über seine gesamte Länge, in unmittelbarem Kontakt mit dem Kontaktblechbauteil 114. Der Rand 125a ist mit dem Kontaktblechbauteil 114 durch Verschweißung (insbesondere mit Hilfe eines Lasers) verbunden. Das Kontaktblechbauteil 114 ist funktional vergleichbar mit dem Kontaktblechbauteil 113 auf der gegenüberliegenden Stirnseite der Zelle, Allerdings weist das Kontaktblechbauteil 114 eine zentrale Aussparung für den Durchtritt des länglichen Hohlkörpers 15 auf. Das Kontaktblechbauteil 114 ist mit dem Boden 12 des Gehäuses elektrisch leitend verbunden, beispielsweise durch Verschweißung.

## Patentansprüche

1. Elektrochemische Zelle (10; 100) mit den folgenden Merkmalen:
a. die Zelle umfasst mindestens eine bandförmige negative Elektrode,
b. die Zelle umfasst mindestens eine bandförmige positive Elektrode,
c. die mindestens eine negative Elektrode und die mindestens eine positive Elektrode umfassen jeweils einen Stromkollektor und eine auf den Stromkollektor aufgebrachte elektrochemisch aktive Komponente,
d. die mindestens eine negative Elektrode und die mindestens eine positive Elektrode bilden einen Verbund und sind dabei durch mindestens einen Separator voneinander getrennt,
e. der Verbund aus der mindestens einen negativen Elektrode, dem mindestens einen Separator und der mindestens einen positiven Elektrode ist spiralförmig um eine Wickelachse (14) gewickelt und bildet einen Wickel (19), wobei der Wickel zwei endständige Stirnseiten und einen umlaufenden Wickelmantel aufweist,
f. die negative Elektrode und die positive Elektrode sind derart ausgebildet und/oder innerhalb des Verbundes derart zueinander angeordnet, dass ein Längsrand des Stromkollektors der negativen Elektrode aus einer der endständigen Stirnseiten und ein Längsrand des Stromkollektors der positiven Elektrode aus der anderen der endständigen Stirnseiten des Wickels austritt,
g. die Zelle umfasst mindestens ein metallisches Kontaktblechbauteil, das in unmittelbarem Kontakt mit einem der austretenden Längsränder steht und das mit diesem Längsrand durch Verschweißung verbunden ist,
h. der Wickel (19) umfasst einen zentralen Hohlraum (20), durch den die Wickelachse (14) verläuft,
i. die Zelle weist ein Gehäuse mit einer ersten und einer zweiten Stirnseite (11, 12) und einem ringförmigen Gehäusemantel (13) auf, das einen Innenraum, in dem der Wickel (19) angeordnet ist, dichtend umschließt,
j. in dem zentralen Hohlraum (20) ist mindestens ein Sensormittel (24, 21) oder mindestens ein Teil eines Sensormittels (25) angeordnet, das Zustandsänderungen des Wickels (19) qualitativ und/oder quantitativ erfassen kann,
k. an der ersten und/oder der zweiten Stirnseite (11, 12) befindet sich ein Anzeige- und/oder Kontaktmittel (23), das von dem mindestens einen Sensormittel (24, 21, 25) erfasste Messwerte anzeigen und/oder über das diese Messwerte an eine Empfangs- und/oder Auswerteeinheit übertragen werden können,
**dadurch gekennzeichnet, dass**
l. das mindestens eine Sensormittel einen Drucksensor (25) umfasst,
m. in dem zentralen Hohlraum (20) des Wickels (19) ein länglicher Hohlkörper angeordnet ist, und
n. das Sensormittel den in den zentralen Hohlraum hineinragenden länglichen Hohlkörper (15), über den der von dem Gehäuse umschlossene Innenraum mit dem Drucksensor (25) in kommunizierender Verbindung steht, umfasst.

2. Zelle nach Anspruch 1 mit mindestens einem der folgenden zusätzlichen Merkmale:
a. Das mindestens eine Sensormittel umfasst eine Referenzelektrode (24).
b. Das mindestens eine Sensormittel umfasst einen Temperatursensor (21).

3. Zelle nach Anspruch 2 mit mindestens einem der folgenden zusätzlichen Merkmale:
a. Die Referenzelektrode (24) ist in dem zentralen Hohlraum (20) angeordnet.
b. Das Sensormittel umfasst mindestens ein Verbindungsmittel (15), über das von der Referenzelektrode (24) ermittelte Messwerte an das Anzeige- und/oder Kontaktmittel (23) übermittelt werden können.

4. Zelle nach Anspruch 3 mit dem folgenden zusätzlichen Merkmal:
a. Die Referenzelektrode (24) umfasst Lithium oder ein lithiumhaltiges Material und das mindestens eine Verbindungsmittel (15) ist ein elektrischer Leiter.

5. Zelle nach einem der Ansprüche 2 bis 4 mit mindestens einem der folgenden zusätzlichen Merkmale:
a. Der Temperatursensor (21) ist in dem zentralen Hohlraum (20) angeordnet.
b. Das Sensormittel umfasst mindestens ein Verbindungsmittel (22), über das von dem Temperatursensor (21) ermittelte Messwerte an das Anzeige- und/oder Kontaktmittel (23) übermittelt werden können.

6. Zelle nach Anspruch 5 mit dem folgenden zusätzlichen Merkmal:
a. Der Temperatursensor (21) ist ein temperaturabhängiger Widerstand oder umfasst einen temperaturabhängigen Widerstand und das mindestens eine Verbindungsmittel umfasst einen elektrischen Leiter (22).

7. Zelle nach Anspruch 1 mit mindestens einem der folgenden zusätzlichen Merkmale:
a. Der längliche Hohlkörper (15) besteht zumindest teilweise aus Glas und/oder Keramik und/oder Metall und/oder Kunststoff.
b. Der längliche Hohlkörper (15) ist zumindest in Teilbereichen oder vollständig elektrisch leitend ausgebildet.
c. Der längliche Hohlkörper (15) ist mit elektrisch leitfähigem Material zumindest teilweise beschichtet.
d. Der längliche Hohlkörper (15) ist elektrisch von dem Gehäuse und/oder mindestens einer der Elektroden entkoppelt.
e. Der längliche Hohlkörper (15) ist mit mindestens einer der Stirnseiten (11, 12) des Gehäuses dichtend verbunden.

8. Zelle nach einem der vorhergehenden Ansprüche mit mindestens einem der folgenden Merkmale:
a. Der Drucksensor (25) ist an einer der Stirnseiten (12) des Gehäuses angeordnet.
b. Der Drucksensor (25) ist ein Piezo-Drucksensor.

9. Zelle nach einem der vorhergehenden Ansprüche mit mindestens einem der folgenden zusätzlichen Merkmale:
a. Der längliche Hohlkörper (15) ist zur Temperierung der Zelle (10) eingerichtet.
b. Der längliche Hohlkörper (15) steht mit einer externen Temperierungseinrichtung in Kontakt.

10. Zelle nach einem der vorhergehenden Ansprüche mit einem der folgenden zusätzlichen Merkmale:
a. Das Anzeige- und/oder Kontaktmittel umfasst eine PCB-Platine (23).
b. Das Anzeige- und/oder Kontaktmittel ist eine PCB-Platine (23)
c. Das Anzeige- und/oder Kontaktmittel ist auf einer PCB-Platine angeordnet.

11. Zelle nach Anspruch 10 mit mindestens einem der folgenden zusätzlichen Merkmale:
a. Die PCB-Platine (23) weist eine zentrale Aussparung oder Durchbrechung zur Aufnahme mindestens eines Sensormittels (24, 21, 25) und/oder des länglichen Hohlkörpers (15) auf.
b. Die PCB-Platine (23) ist dichtend mit einem umgebenden Bereich der Stirnseite (11, 12) oder mit dem umgebenden Gehäusemantel verbunden.
c. Die PCB-Platine (23) ist dichtend mit einem umgebenden Bereich der Stirnseite (11, 12) oder mit dem umgebenden Gehäusemantel verbunden.
d. Die PCB-Platine (23) bildet ein Teil des Gehäuses der Zelle, insbesondere die Stirnseite oder ein Teil der Stirnseite des Gehäuses.

12. Zelle nach einem der vorhergehenden Ansprüche mit mindestens einem der folgenden zusätzlichen Merkmale:
a. Die Zelle (10) ist eine Lithium-Ionen-Zelle.
b. Die Zelle (10) ist eine zylindrischen Rundzelle.
c. Die Zelle (10) ist eine Knopfzelle.

## Claims

1. Electrochemical cell (10; 100) having the following features:
a. The cell comprises at least one ribbon-shaped negative electrode,
b. the cell comprises at least one ribbon-shaped positive electrode,
c. the at least one negative electrode and the at least one positive electrode each comprise a current collector and an electrochemically active component applied to the current collector,
d. the at least one negative electrode and the at least one positive electrode form an assembly and are separated from each other by at least one separator,
e. the assembly comprising the at least one negative electrode, the at least one separator and the at least one positive electrode is wound spirally around a winding axis (14) and forms a winding (19), the winding having two terminal end faces and a circumferential winding shell,
f. the negative electrode and the positive electrode are configured and/or arranged within the assembly relative to each other such that a longitudinal edge of the current collector of the negative electrode protrudes from one of the terminal end faces and a longitudinal edge of the current collector of the positive electrode protrudes from the other of the terminal end faces of the winding,
g. the cell comprises at least one contact sheet metal member which is in direct contact with one of the protruding longitudinal edges and which is connected to this longitudinal edge by welding,
h. the winding (19) comprises a central cavity (20) through which the winding axis (14) passes,
i. the cell has a housing having first and second end faces (11, 12) and an annular housing shell (13) sealingly enclosing an interior space in which the winding (19) is disposed,
j. at least one sensor means (24, 21) or at least a part of a sensor means (25), which can qualitatively and/or quantitatively detect changes in the state of the winding (19), is arranged in the central cavity (20)
k. on the first and/or the second end face (11, 12) there is a display means and/or a contact means (23) which can display measured values detected by the at least one sensor means (24, 21, 25) and/or via which these measured values can be transmitted to a receiving unit and/or an evaluation unit,
**characterized in that**
l. the at least one sensor means comprises a pressure sensor (25),
m. an elongated hollow body is arranged in the central cavity (20) of the winding (19), and
n. the sensor means comprises the elongated hollow body (15) projecting into the central cavity, via which the interior space enclosed by the housing is in communicating connection with a pressure sensor (25).

2. The cell of claim 1, having at least one of the following additional features:
a. The at least one sensor means comprises a reference electrode (24).
b. The at least one sensor means comprises a temperature sensor (21).

3. The cell of claim 2, having at least one of the following additional features:
a. The reference electrode (24) is located in the central cavity (20).
b. The sensor means comprises at least one connection means (15) via which measured values determined by the reference electrode (24) can be transmitted to the display and/or contact means (23).

4. The cell of claim 3, having the following additional feature:
a. The reference electrode (24) comprises lithium or a lithium-containing material, and the at least one connection means (15) is an electrical conductor.

5. The cell of any one of claims 2 to 4, having at least one of the following additional features:
a. The temperature sensor (21) is located in the central cavity (20).
b. The sensor means comprises at least one connection means (22) via which measured values determined by the temperature sensor (21) can be transmitted to the display and/or contact means (23).

6. The cell of claim 5, having the following additional feature:
a. The temperature sensor (21) is a temperature-dependent resistor or comprises a temperature-dependent resistor, and the at least one connection means comprises an electrical conductor (22).

7. The cell of claim 1, having at least one of the following additional features:
a. The elongated hollow body (15) consists at least in part of glass and/or ceramic and/or metal and/or plastic.
b. The elongated hollow body (15) is electrically conductive at least in parts or completely.
c. The elongated hollow body (15) is at least partially coated with electrically conductive material.
d. The elongated hollow body (15) is electrically isolated against the housing and/or at least one of the electrodes.
e. The elongated hollow body (15) is sealingly connected to at least one of the end faces (11, 12) of the housing.

8. The cell of any one of the preceding claims, having at least one of the following features:
a. The pressure sensor (25) is located on one of the end faces (12) of the housing.
b. The pressure sensor (25) is a piezo pressure sensor.

9. The cell of any one of claims 7 to 9, having at least one of the following additional features:
a. The elongated hollow body (15) is arranged for temperature control of the cell (10).
b. The elongated hollow body (15) is in contact with an external temperature control device.

10. A cell according to any one of the preceding claims, having any one of the following additional features:
a. The display and/or contact means comprises a PCB board (23).
b. The display and/or contact means is a PCB board (23)
c. The display and/or contact means is arranged on a PCB board.

11. The cell of claim 10, having at least one of the following additional features:
a. The PCB board (23) has a central recess or aperture for receiving at least one sensor means (24, 21, 25) and/or the elongated hollow body (15).
b. The PCB board (23) is sealingly connected to a surrounding area of the end face (11, 12) or to the surrounding housing shell.
c. The PCB board (23) is sealingly connected to a surrounding area of the end face (11, 12) or to the surrounding housing shell.
d. The PCB board (23) forms part of the housing of the cell, in particular the end face or part of the end face of the housing.

12. The cell of any one of the preceding claims, having at least one of the following additional features:
a. The cell (10) is a lithium-ion cell.
b. The cell (10) is a cylindrical round cell.
c. The cell (10) is a button cell.

## Revendications

1. Cellule électrochimique (10; 100) présentant les particularités suivantes :
a. la cellule comprend au moins une électrode négative en forme de bande,
b. la cellule comprend au moins une électrode positive en forme de bande,
c. l'au moins une électrode négative et l'au moins une électrode positive comprennent respectivement un collecteur de courant et un composant actif qui est appliqué de façon électrochimique sur le collecteur de courant,
d. l'au moins une électrode négative et l'au moins une électrode positive forment un ensemble et sont séparées l'une de l'autre par au moins un séparateur,
e. l'ensemble de l'au moins une électrode négative, de l'au moins un séparateur et de l'au moins une électrode positive est enroulé de manière hélicoïdale autour d'un axe d'enroulement (14) et forme un enroulement (19), l'enroulement présentant deux faces d'extrémité de borne et une enveloppe d'enroulement circonférentielle,
f. l'électrode négative et l'électrode positive sont conçues et/ou disposées à l'intérieur de l'ensemble l'une par rapport à l'autre de telle sorte qu'un bord longitudinal du collecteur de courant de l'électrode négative sort de l'une des faces d'extrémité de borne, et qu'un bord longitudinal du collecteur de courant de l'électrode positive sort de l'autre des faces d'extrémité de borne de l'enroulement,
g. la cellule comprend au moins un élément en tôle de contact métallique qui est en contact direct avec l'un des bords longitudinaux de sortie et qui est relié à ce bord longitudinal par un procédé de soudage,
h. l'enroulement (19) comprend une cavité centrale (20) à travers laquelle s'étend l'axe d'enroulement (14),
i. la cellule comporte un boîtier ayant une première et une deuxième face d'extrémité (11, 12) et une enveloppe de boîtier annulaire (13) qui entoure de manière étanche un espace intérieur dans lequel est disposé l'enroulement (19),
j. la cavité centrale (20) est équipée d'au moins un moyen de détection (24, 21) ou d'au moins une partie d'un moyen de détection (25), qui peut détecter qualitativement et/ou quantitativement des changements de l'état de l'enroulement (19),
k. sur la première et/ou la deuxième face d'extrémité (11, 12) se trouve un moyen d'affichage et/ou de contact (23) qui peut afficher des valeurs de mesure détectées par l'au moins un moyen de détection (24, 21, 25) et/ou par l'intermédiaire duquel ces valeurs de mesure peuvent être transmises à une unité de réception et/ou d'analyse,
**caractérisée en ce que**
l. l'au moins un moyen de détection comprend un capteur de pression (25),
m. un corps creux allongé est disposé dans la cavité centrale (20) de l'enroulement (19),
n. le moyen de détection comprend le corps creux allongé (15) faisant saillie dans la cavité centrale, par l'intermédiaire duquel l'espace intérieur entouré par le boîtier est en liaison de communication avec le capteur de pression (25).

2. Cellule selon la revendication 1, présentant au moins l'une des particularités supplémentaires suivantes :
a. L'au moins un moyen de détection comprend une électrode de référence (24).
b. L'au moins un moyen de détection comprend un capteur de température (21).

3. Cellule selon la revendication 2, présentant au moins l'une des particularités supplémentaires suivantes :
a. L'électrode de référence (24) est disposée dans la cavité centrale (20).
b. Le moyen de détection comprend au moins un moyen de connexion (15), par l'intermédiaire duquel les valeurs de mesure déterminées par l'électrode de référence (24) peuvent être transmises au moyen d'affichage et/ou de contact (23).

4. Cellule selon la revendication 3, présentant la particularité supplémentaire suivante :
a. L'électrode de référence (24) comprend du lithium ou un matériau contenant du lithium et l'au moins un moyen de connexion (15) est un conducteur électrique.

5. Cellule selon l'une quelconque des revendications 2 à 4, présentant au moins l'une des particularités supplémentaires suivantes :
a. Le capteur de température (21) est disposé dans la cavité centrale (20).
b. Le moyen de détection comprend au moins un moyen de connexion (22), par l'intermédiaire duquel les valeurs de mesure déterminées par le capteur de température (21) peuvent être transmises au moyen d'affichage et/ou de contact (23).

6. Cellule selon la revendication 5, présentant la particularité supplémentaire suivante :
a. Le capteur de température (21) est une résistance dépendant de la température ou comprend une résistance dépendant de la température et l'au moins un moyen de connexion comprend un conducteur électrique (22).

7. Cellule selon la revendication 1, présentant au moins l'une des particularités supplémentaires suivantes :
a. Le corps creux allongé (15) se compose au moins partiellement de verre et/ou de céramique et/ou de métal et/ou de matière plastique.
b. Le corps creux allongé (15) est configuré pour être électriquement conducteur au moins dans des zones partielles ou en totalité.
c. Le corps creux allongé (15) est au moins partiellement revêtu d'un matériau électriquement conducteur.
d. Le corps creux allongé (15) est électriquement découplé du boîtier et/ou d'au moins l'une des électrodes.
e. Le corps creux allongé (15) est relié de manière étanche à au moins l'une des faces d'extrémité (11, 12) du boîtier.

8. Cellule selon l'une quelconque des revendications précédentes, présentant au moins l'une des particularités suivantes :
a. Le capteur de pression (25) est disposé sur l'une des faces d'extrémité (12) du boîtier.
b. Le capteur de pression (25) est un capteur de pression piézoélectrique.

9. Cellule selon l'une quelconque des revendications précédentes, présentant au moins l'une des particularités supplémentaires suivantes :
a. Le corps creux allongé (15) est conçu réguler la température de la cellule (10).
b. Le corps creux allongé (15) est en contact avec un dispositif de régulation de température externe.

10. Cellule selon l'une quelconque des revendications précédentes, présentant au moins l'une des particularités supplémentaires suivantes :
a. Le moyen d'affichage et/ou de contact comprend une carte de circuit imprimé (23).
b. Le moyen d'affichage et/ou de contact est une carte de circuit imprimé (23).
c. Le moyen d'affichage et/ou de contact est disposé sur une carte de circuit imprimé.

11. Cellule selon la revendication 10, présentant au moins l'une des particularités supplémentaires suivantes :
a. La carte de circuit imprimé (23) présente un évidement ou une ouverture centrale pour le logement d'au moins un moyen de détection (24, 21, 25) et/ou du corps creux allongé (15).
b. La carte de circuit imprimé (23) est reliée de manière étanche à une zone environnante de la face d'extrémité (11, 12) ou à l'enveloppe de boîtier environnante.
c. La carte de circuit imprimé (23) est reliée de manière étanche à une zone environnante de la face d'extrémité (11, 12) ou à l'enveloppe de boîtier environnante.
d. La carte de circuit imprimé (23) forme une partie du boîtier de la cellule, notamment la face d'extrémité ou une partie de la face d'extrémité du boîtier.

12. Cellule selon l'une quelconque des revendications précédentes, présentant au moins l'une des particularités supplémentaires suivantes :
a. La cellule (10) est une cellule au lithium-ion.
b. La cellule (10) est une cellule ronde cylindrique.
c. La cellule (10) est une pile bouton.
